# EUROPÄISCHE PATENTSCHRIFT

(11) **EP 3 124 943 B1**
(45) Veröffentlichungstag und Bekanntmachung des Hinweises auf die Patenterteilung: **02.06.2021**
(21) Anmeldenummer: 16178284.2
(22) Anmeldetag: 07.07.2016
(51) Int. Cl.: G01L 23/10, G01L 19/00, G01L 9/00, G01L 19/04, G01L 19/14

(54) **PIEZOELEKTRISCHER DRUCKSENSOR UND VERFAHREN ZUR HERSTELLUNG DIESES PIEZOELEKTRISCHEN DRUCKSENSORS**
PIEZOELECTRIC PRESSURE SENSOR AND METHOD FOR PRODUCING SAID PIEZOELECTRIC PRESSURE SENSOR
CAPTEUR DE PRESSION PIEZOELECTRIQUE ET PROCEDE DE FABRICATION DUDIT CAPTEUR DE PRESSION PIEZOELECTRIQUE

(30) Priorität: 31.07.2015 EP 15179379
(43) Veröffentlichungstag der Anmeldung: 01.02.2017
(73) Patentinhaber: Kistler Holding AG, 8408 Winterthur (CH)
(72) Erfinder: Buck, Reinhold, 8308 Illnau (CH); Giger, Martin, 8400 Winterthur (CH)

(56) Entgegenhaltungen:
- WO-A1-2013/147260
- WO-A1-2015/092997
- DE-A1- 3 423 711
- DE-A1- 19 936 300
- GB-A- 2 022 261
- US-A- 3 960 018
- US-A- 4 645 965

## Beschreibung

### Technisches Gebiet

Die Erfindung betrifft einen piezoelektrischen Drucksensor nach dem Oberbegriff des unabhängigen Anspruchs. Die Erfindung betrifft auch ein Verfahren zur Herstellung dieses piezoelektrischen Drucksensors.

### Stand der Technik

Piezoelektrische Drucksensoren sind bekannt und werden vielfältig eingesetzt. So wird mit ihnen bei der Druckindizierung von Verbrennungsmotoren ein in einer Druckkammer herrschender Zylinderdruck in Abhängigkeit einer Kurbelwellenstellung oder einer Zeit erfasst. Verbrennungsmotoren umfassen Viertaktmotoren und Zweitaktmotoren wie Ottomotoren, Dieselmotoren, Wankelmotoren, usw.. Bei Schiffsdieselmotoren wird mit ihnen eine Langzeitüberwachung eines Zylinderdrucks durchgeführt. Mit piezoelektrischen Drucksensoren werden schnelle Druckverläufe erfasst, die normalerweise im Bereich von 150 bis 250 bar sind, die aber bei Vorentflammung und Motorklopfen Druckspitzen von 500 bar und höher aufweisen. Piezoelektrische Drucksensoren lassen sich aber auch bei der Drucküberwachung in Strahltriebwerken, Gasturbinen, Dampfturbinen, Dampfmaschinen, usw.. einsetzen.

Ein solcher piezoelektrischer Drucksensor ist in der Schrift CH394637A1 offenbart. Der piezoelektrische Drucksensor weist eine Membran auf, die durch eine Bohrung der Druckkammer direkt in die Druckkammer ragt. Ein Rand der Membran ist mit einem Gehäuse des piezoelektrischen Drucksensors verschweisst. Der von der Membran erfasste Druckverlauf wirkt auf einen piezoelektrischen Aufnehmer, der im Gehäuse nahe der Membran angeordnet ist. Der Druckverlauf erzeugt auf dem piezoelektrischen Aufnehmer elektrische Polarisationsladungen, welche über eine Elektrode als Signale abgenommen werden. Die Signale sind proportional zur Grösse des Druckverlaufs. Die Elektrode ist auf dem piezoelektrischen Aufnehmer angeordnet. Über einen elektrischen Leiter werden die Signale von der Elektrode zu einer Buchse für eine Steckverbindung eines Signalkabels zu einer Auswerteeinheit abgeleitet. Die Buchse ist an einer von der Membran abgewandten Seite des Gehäuses angebracht.

Der piezoelektrische Aufnehmer ist über eine Vorspannhülse mechanisch vorgespannt. Konstruktiv wird das durch einen kreissymmetrischen Aufbau des piezoelektrischen Drucksensors bewerkstelligt. Das Gehäuse ist zylinderförmig. Die Membran ist stirnseitig am Gehäuse angebracht, dahinter ist der piezoelektrische Aufnehmer entlang einer Längsachse des Gehäuses angeordnet. Der elektrische Leiter wird zentral durch den piezoelektrischen Aufnehmer und das Gehäuse geführt. Die Vorspannhülse ist bezüglich der Längsachse radial ausserhalb des piezoelektrischen Aufnehmers angeordnet. Ein hinteres Ende der Vorspannhülse ist mit dem Gehäuse verschweisst, ein vorderes Ende der Vorspannhülse ist mit der Membran verschweisst. Die Vorspannanordnung dichtet somit den piezoelektrischen Aufnehmer gegen die Buchse vakuumdicht und druckdicht ab.

WO2015092997A1 und WO2013147260A1 beschreiben beide jeweils einen Drucksensor mit einem Gehäuse, einer Membran und einem piezoelektrischen Sensorelement. Eine Elektrode leitet auf dem Sensorelement erzeugte Sensorsignale über eine Signalleitung an eine Leiterplatte ab, wo sie von einem Schaltkreis elektrisch verstärkt werden. Auf der Rückseite vom Gehäuse sind Steckkontakte für eine Steckverbindung mit einem Signalkabel angeordnet. Verstärkte Sensorsignale lassen sich über die Steckverbindung auf das Signalkabel weiterleiten.

DE342711A1 bezieht sich auf einen Druckaufnehmer mit einem Gehäuse, einem Druckübertragungselement und mehreren piezoelektrischen Messelementen. Eine Elektrodenscheibe ist elektrisch mit einem Ladungsableitungsstift verbunden. Der Ladungsableitungsstift wiederum ist elektrisch mit einem Anschlussstift eines Anschlusssteckers verbunden. Messsignale werden so elektrisch von den piezoelektrischen Messelementen zum Anschlussstecker abgeleitet.

Auch US3960018A1 offenbart einen piezoelektrischen Drucksensor mit einem Gehäuse, einem flexiblen Stempel und piezoelektrischen Elementen. Eine Elektrode leitet auf den piezoelektrischen Elementen erzeugte Ausgangssignale über Signalleiter an eine Buchse, wo sie über eine Steckverbindung mit einem Signalkabel abgreifbar sind.

Nun ist die Steckverbindung zwischen Buchse und Signalkabel beim Einsatz des piezoelektrischen Drucksensors permanent starken Motorvibrationen und hohen Temperaturen von 200°C und höher ausgesetzt, was zu Mikroreibung und Reibkorrosion der elektrischen Steckkontakte führen kann. Auch kann der Signalkabelmantel bei hohen Temperaturen ausgasen und zu Reibpolymerisation am elektrischen Steckkontakt führen. Und es kann in der Steckverbindung bei hohen Temperaturen zur Diffusion von unedlen Metallen an eine Kontaktoberfläche der elektrischen Steckkontakte kommen und eine dort vorhandene Oxidschicht aufbauen. Diese Effekte können einzeln oder kombiniert auftreten. In der Folge kann sich der elektrische Kontaktwiderstand der elektrischen Steckkontakte verändern. So kann der elektrische Kontaktwiderstand aus dem mQ-Bereich um mehrere Grössenordnungen in den MΩ-Bereich ansteigen und die Signale verfälschen, die an die Auswerteeinheit abgeleitet werden, was zu fehlerhaften Signalauswertungen führt.

Eine erste Aufgabe der Erfindung besteht darin, einen piezoelektrischen Drucksensor anzugeben, bei dem eine Signalverfälschung bei der Signalableitung wirksam vermieden wird. Eine weitere Aufgabe der vorliegenden Erfindung ist es, einen piezoelektrischen Drucksensor bereitzustellen, bei dem auch die Signalableitung mechanisch stabil angeordnet ist. Und die Erfindung stellt sich die Aufgabe, ein Verfahren zur kostengünstigen Herstellung eines piezoelektrischen Drucksensors aufzuzeigen.

### Darstellung der Erfindung

Zumindest eine dieser Aufgaben wird durch die Merkmale des unabhängigen Anspruchs gelöst.

Die Erfindung betrifft einen piezoelektrischen Drucksensor nach Anspruch 1.

Die stoffschlüssige Verbindung zwischen der Ladungsableitung und dem elektrischen Verbindungselement verhindert das Auftreten von Mikroreibung, Reibkorrosion, Reibpolymerisation oder einen Aufbau einer Oxydschicht zwischen den Kontaktoberflächen der elektrischen Steckkontakte beim Einsatz des piezoelektrischen Drucksensors, wodurch sich Signalverfälschung wirksam vermeiden lässt.

Die Erfindung betrifft auch ein Verfahren zur Herstellung eines solchen piezoelektrischen Drucksensors nach Anspruch 12.

Somit wird durch den Stoffschluss zwischen der Ladungsableitung der Sensoranordnung und dem elektrischen Verbindungselement ein piezoelektrischer Drucksensor hergestellt. Dies ermöglicht es, Varianten der Sensoranordnung mit Varianten der Signalkabelanordnung zu kombinieren oder es wird ermöglicht, Varianten der Sensoranordnung direkt mit der Auswerteeinheit zu einem piezoelektrischen Drucksensor zu kombinieren. Aus einer geringen Anzahl von gleichteiligen Halbzeugen lässt sich so eine Vielzahl unterschiedlicher piezoelektrischer Drucksensoren herstellen, was die Herstellung kostengünstig macht.

### Kurze Beschreibung der Zeichnungen

Im Folgenden wird die Erfindung beispielhaft unter Beizug der Figuren näher erklärt. Es zeigen
- Fig. 1: einen ersten Schnitt durch einen piezoelektrischen Drucksensor mit Sensoranordnung, Signalkabelanordnung und Auswerteeinheit;
- Fig. 2: einen zweiten Schnitt durch den piezoelektrischen Drucksensor mit Sensoranordnung, Signalkabelanordnung und Auswerteeinheit nach Fig. 1;
- Fig. 3: einen Schnitt durch eine erste Ausführungsform der Sensoranordnung nach Fig. 1 oder 2;
- Fig. 4: einen Schnitt durch eine zweite Ausführungsform der Sensoranordnung nach Fig. 1 oder 2;
- Fig. 5: einen Schnitt durch eine dritte Ausführungsform der Sensoranordnung nach Fig. 1 oder 2;
- Fig. 6: einen Schnitt durch eine vierte Ausführungsform der Sensoranordnung des piezoelektrischen Drucksensors nach Fig. 1 oder 2;
- Fig. 7: einen Schnitt durch einen Teil des piezoelektrischen Drucksensors nach Fig. 1;
- Fig. 8: einen Schnitt durch einen Teil des piezoelektrischen Drucksensors nach Fig. 2;
- Fig. 9: eine Ausschnitt eines Teils des piezoelektrischen Drucksensors nach Fig. 7 und 8;
- Fig. 10: eine Ansicht eines Teils des piezoelektrischen Drucksensors nach Fig. 1, 2, 7 bis 9;
- Fig. 11: eine Ansicht eines Teils des piezoelektrischen Drucksensors nach Fig. 1 bis 10 vor der mechanischen Verbindung der Sensoranordnung mit der Signalkabelanordnung; und
- Fig.12: eine Ansicht des Teils des piezoelektrischen Drucksensors nach Fig. 11 nach der mechanischen Verbindung der Ladungsableitung der Sensoranordnung mit der Signalkabelanordnung.

### Wege zur Ausführung der Erfindung

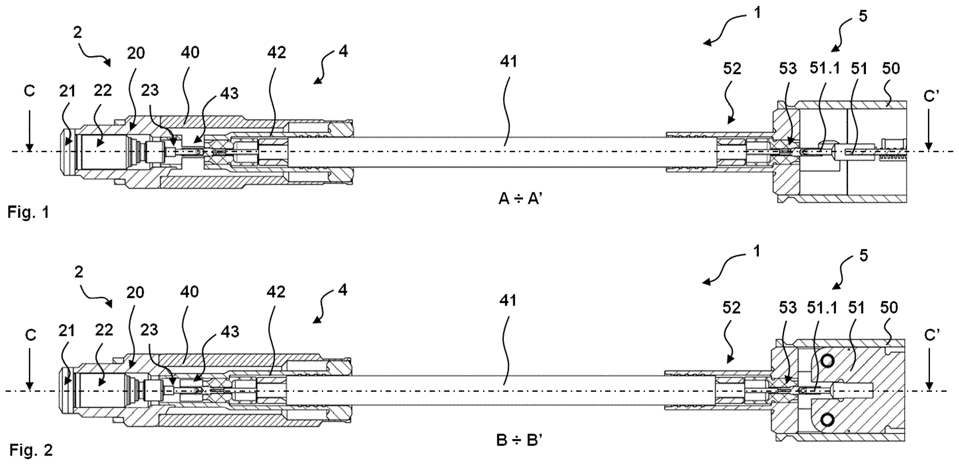

Fig. 1 und 2 zeigen Schnitte durch den erfindungsgemässen piezoelektrischen Drucksensor 1. Die Schnitte sind entlang einer Längsachse CC' des einsatzfertig montierten piezoelektrischen Drucksensors 1 dargestellt. Fig. 1 ist ein Vollschnitt mit einer Vertikalachse AA' des piezoelektrischen Drucksensors 1 als Schnittlinie A÷A'. Fig. 2 ist ein Vollschnitt mit einer Horizontalachse BB' des piezoelektrischen Drucksensors 1 als Schnittlinie B÷B'. Die Vertikalachse AA' und die Horizontalachse BB' stehen senkrecht aufeinander. Der piezoelektrische Drucksensor 1 und seine Bestandteile sind im Querschnitt bezüglich der Längsachse CC' weitgehend kreisförmig. Das Adjektiv "weitgehend" schliesst eine Variation der Kreisform von ±10% ein. Bei Kenntnis der vorliegenden Erfindung kann der piezoelektrische Drucksensor und seine Bestandteile im Querschnitt aber auch rechteckig, vieleckig, usw. sein.

Die Bestandteile des piezoelektrischen Drucksensor 1 können mechanischen miteinander kontaktiert oder mechanisch miteinander verbunden sein. Im Sinne der Erfindung sind bei einem mechanischen Kontakt mehrere Bestandteile lediglich in direkter Berührung miteinander, während bei einer mechanischen Verbindung mehrere Bestandteile stoffschlüssig, kraftschlüssig oder formschlüssig miteinander fixiert sind. Ein mechanischer Kontakt ist also keine mechanische Verbindung. Ein mechanischer Kontakt ist nicht druckdicht. Mit dem Adjektiv "druckdicht" wird eine Festigkeit gegen Druckverläufe ab 10 bar bezeichnet.

Der piezoelektrische Drucksensor 1 weist eine Sensoranordnung 2, eine Signalkabelanordnung 4 und eine Auswerteeinheit 5 auf. Die Sensoranordnung 2 ist entweder über die Signalkabelanordnung 4 mit der Auswerteeinheit 5 elektrisch und mechanisch verbunden, oder sie ist direkt mit der Auswerteeinheit 5 elektrisch und mechanisch verbunden.

Die Sensoranordnung 2 ist in einem vorderen Bereich des piezoelektrischen Drucksensors 1 angeordnet, sie weist eine Membran 21, eine Sensorgehäuseanordnung 20, einen piezoelektrischen Aufnehmer 22 und eine Elektrodenanordnung 23 auf. Der piezoelektrische Drucksensor 1 ist mit einer Wandung einer Druckkammer mechanisch verbunden und die Membran 21 ragt durch eine Bohrung direkt in die Druckkammer. Die mechanische Verbindung erfolgt durch Kraftschluss oder Formschluss. Der vordere Bereich des piezoelektrischen Drucksensors 1 ist im Einsatz des piezoelektrischen Drucksensors 1 nahe der Druckkammer permanent starken Motorvibrationen und hohen Temperaturen ausgesetzt. Die Adjektive "vorderes" und "hinteres" werden für den piezoelektrischen Drucksensor 1 und seine Bestandteile so verwendet, dass mit "vorderes" ein zur Membran 21 hin orientierter Bereich bezeichnet wird, während mit "hinteres" ein von der Membran 21 abgewandter Bereich bezeichnet wird.

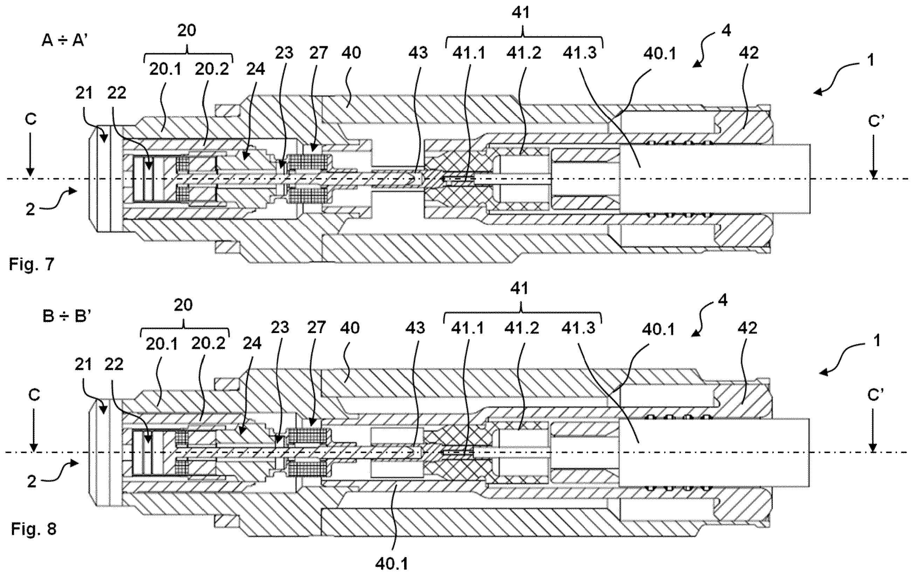

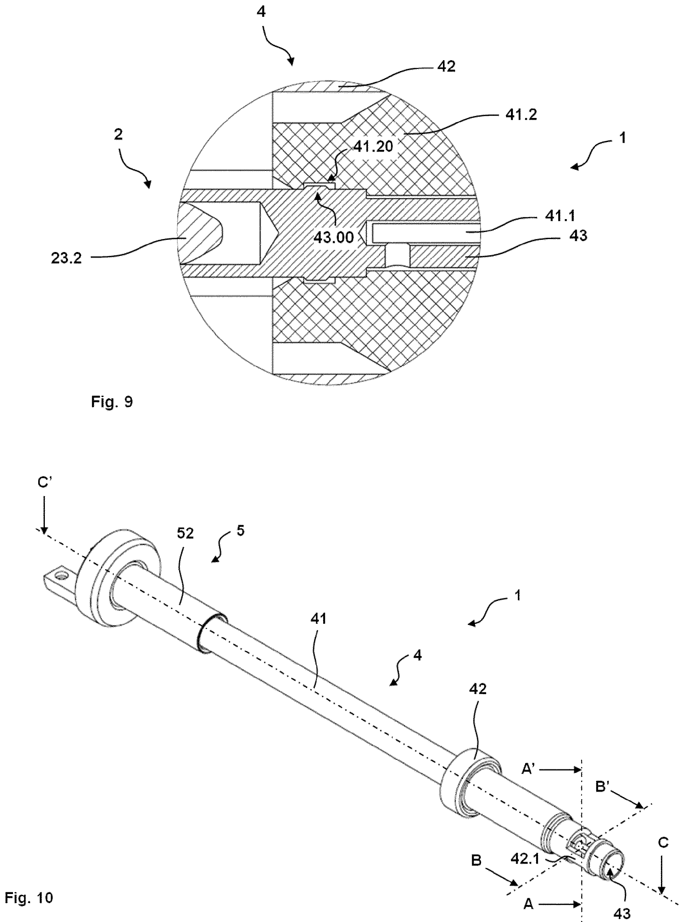

Die Signalkabelanordnung 4 und die Auswerteeinheit 5 sind in einem an den vorderen Bereich anschliessenden Bereich der Umgebung des piezoelektrischen Drucksensors 1 angeordnet. In der Umgebung der Druckkammer herrscht Atmosphärendruck und befinden sich Menschen in Umgebungsluft. Die Signalkabelanordnung 4 weist ein Verbindungselementgehäuse 40, ein Signalkabel 41, einen Stützkörper 42 und ein elektrisches Verbindungselement 43 auf. Weitere Details zur Signalkabelanordnung 4 folgen in der Beschreibung der Fig. 7 bis 12. Die Auswerteeinheit 5 weist eine elektrische Leiterplatte 51 in einem Leiterplattengehäuse 50, einen Stützkörper 52 und ein elektrisches Verbindungselement 53 auf. Weitere Details zur Auswerteeinheit 5 folgen in der Beschreibung der Fig. 9 bis 12.

Die Sensoranordnung 2 weist die Sensorgehäuseanordnung 20 ein Sensorgehäuse 20.1 und ein Versteifungsgehäuse 20.2 auf. Das Versteifungsgehäuse 20.2 verhindert eine Übertragung von mechanischen Verspannungen, die von der mechanischen Verbindung des piezoelektrischen Drucksensors 1 mit der Wandung der Druckkammer herrühren, welche mechanischen Verspannungen über die Sensorgehäuseanordnung 20 auf den piezoelektrischen Aufnehmer 22 gelangen und die Erfassung des Druckverlaufs stören und die Signale verfälschen können. Sensorgehäuse 20.1 und Versteifungsgehäuse 20.2 bestehen aus mechanisch nachgiebigem Material wie aus Reinmetallen, Nickellegierungen, Kobaltlegierungen, Eisenlegierungen, usw. und sind mechanisch miteinander verbunden. Die mechanische Verbindung erfolgt durch Stoffschluss wie Schweissen, Diffusionsschweissen, Thermokompressionsbonden, Löten, usw.. Bei Kenntnis der vorliegenden Erfindung kann der Fachmann die Sensoranordnung auch ohne Versteifungsgehäuse realisieren, so dass die Sensoranordnung nur ein Sensorgehäuse umfasst.

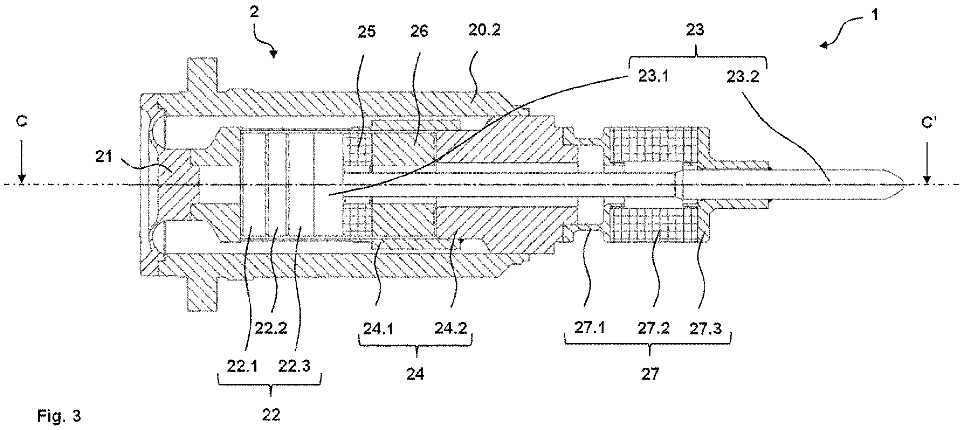

Die Fig. 3 bis 6 zeigen vergrösserte Schnitte durch mehrere Ausführungsformen der Sensoranordnung 2 des piezoelektrischen Drucksensors 1 nach Fig. 1 oder 2. Die stirnseitige Membran 21 besteht aus mechanisch nachgiebigem Material wie aus Reinmetallen, Nickellegierungen, Kobaltlegierungen, Eisenlegierungen, usw.. Ein Rand der Membran 21 ist vollumfänglich mit dem Versteifungsgehäuse 20.2 mechanisch verbunden. Die mechanische Verbindung erfolgt durch Stoffschluss wie Schweissen, Diffusionsschweissen, Thermokompressionsbonden, Löten, usw.. Ein von der Membran 21 erfasster Druckverlauf wirkt als Normalkraft auf den piezoelektrischen Aufnehmer 22. Der piezoelektrische Aufnehmer 22 ist auf der Längsachse CC' direkt hinter der Membran 21 angeordnet.

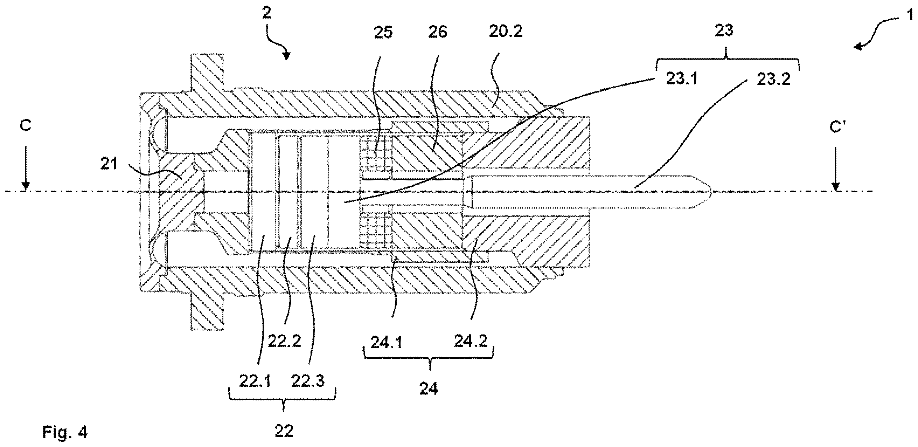

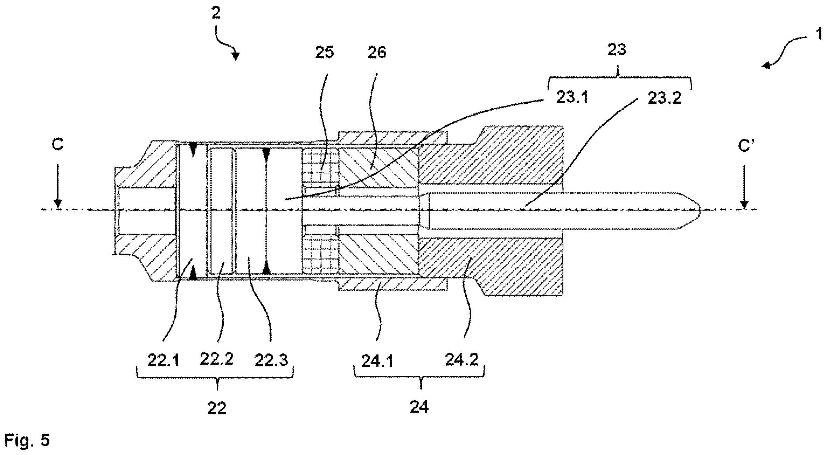

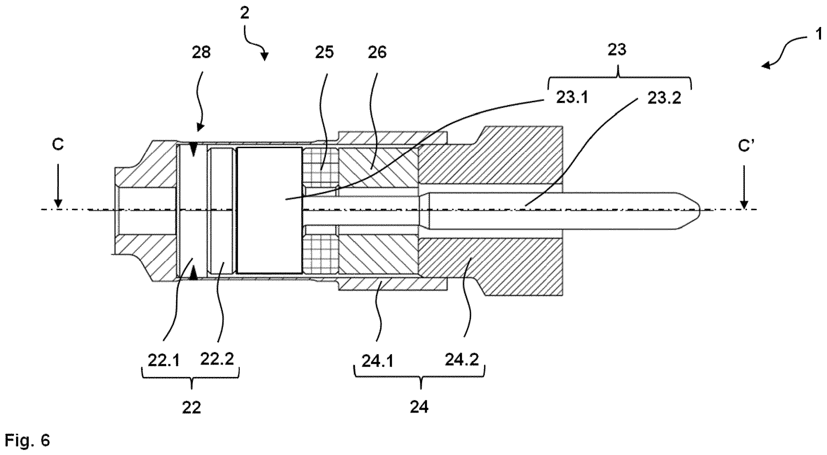

Der piezoelektrische Aufnehmer 22 weist ein erstes Auflageelement 22.1, ein zweites Auflageelement 22.3 und ein piezoelektrisches Aufnehmerelement 22.2 auf. Bezogen auf die Längsachse CC' ist das piezoelektrische Aufnehmerelement 22.2 zwischen dem ersten Auflageelement 22.1 und dem zweiten Auflageelement 22.3 angeordnet. Die Membran 21 ist im flächigen mechanischen Kontakt mit dem ersten Auflageelement 22.1. In den Ausführungsformen einer Sensoranordnung 2 nach Fig. 3 und 4 sind das erste Auflageelement 22.1 und das zweite Auflageelement 22.3 im flächigen mechanischen Kontakt mit dem piezoelektrischen Aufnehmerelement 22.2. In den Ausführungsformen einer Sensoranordnung 2 nach Fig. 5 und 6 sind das erste Auflageelement 22.1 und das zweite Auflageelement 22.3 mechanisch mit dem piezoelektrischen Aufnehmerelement 22.2 verbunden. Die mechanische Verbindung erfolgt durch Stoffschluss wie Schweissen, Diffusionsschweissen, Thermokompressionsbonden, Löten, usw.. Bei Kenntnis der vorliegenden Erfindung kann der Fachmann die Sensoranordnung auch ohne erstes Auflageelement und ohne zweites Auflageelement realisieren, so dass das piezoelektrisches Aufnehmerelement im direkten flächigen mechanischen Kontakt mit der Membran 21 einerseits und der Elektrodenanordnung 23 andererseits ist. Die flächigen mechanischen Kontakte können auch durch mechanische Verbindungen realisiert werden. Die mechanische Verbindungen erfolgen durch Stoffschluss wie Diffusionsschweissen, Thermokompressionsbonden, Löten, usw..

Die Auflageelemente 22.1, 22.3 verteilen die Normalkraftwirkung gleichmässig auf das piezoelektrische Aufnehmerelement 22.2. Die Auflageelemente 22.1, 22.3 sind zylinderförmig und bestehen aus elektrisch leitfähigem und mechanisch steifem Material wie aus Reinmetallen, Nickellegierungen, Kobaltlegierungen, Eisenlegierungen, elektrisch leitender Keramik, Keramik mit elektrisch leitender Beschichtung, usw.. Das piezoelektrische Aufnehmerelement 22.2 ist ebenfalls zylinderförmig und besteht aus piezoelektrischem Kristallmaterial wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, usw.. Das piezoelektrische Aufnehmerelement 22.2 ist kristallographisch so orientiert geschnitten, dass es eine hohe Empfindlichkeit für den aufzunehmenden Druckverlauf hat. Vorteilhafterweise ist das piezoelektrische Aufnehmerelement 22.2 so orientiert, dass auf den gleichen Oberflächen auf denen die Normalkraft einwirkt, auch negative und positive elektrischer Polarisationsladungen erzeugt werden. Die Normalkraft kann auf die Oberfläche belastend oder entlastend einwirken. Bei mechanischer Belastung durch die Normalkraft werden negative Polarisationsladungen erzeugt; bei mechanischer Entlastung durch die Normalkraft werden positive Polarisationsladungen erzeugt. Die Elektrodenanordnung 23 ist auf der von der Membran 21 abgewandten Seite des piezoelektrischen Aufnehmers 22 auf der Längsachse CC' direkt hinter dem piezoelektrischen Aufnehmer 22 angeordnet. Bei Kenntnis der vorliegenden Erfindung kann der Fachmann natürlich auch mehr als ein piezoelektrisches Aufnehmerelement verwenden.

Die Elektrodenanordnung 23 weist einen zylinderförmigen Ladungsabgriff 23.1 und eine stabförmige Ladungsableitung 23.2 auf. Die Elektrodenanordnung 23 besteht aus elektrisch leitfähigem Material wie aus Reinmetallen, Nickellegierungen, Kobaltlegierungen, Eisenlegierungen, usw.. Ladungsabgriff 23.1 und Ladungsableitung 23.2 können einstückig sein oder mechanisch miteinander verbunden sein. Beliebige mechanische Verbindungen wie Stoffschluss, Formschluss und Kraftschluss sind möglich. Ladungsabgriff 23.1 und Ladungsableitung 23.2 sind elektrisch miteinander verbunden. Negative Polarisationsladungen werden über das zweite Auflageelemente 22.3 von der Elektrodenanordnung 23 als Signale abgenommen und an die Auswerteeinheit 5 abgeleitet. Positive Polarisationsladungen werden über das erste Auflageelemente 22.1 und die Membran 21 vom geerdeten Versteifungsgehäuse 20.2 abgenommen. Bei Kenntnis der vorliegenden Erfindung kann der Fachmann zusätzlich positive Polarisationsladungen als Signale verwenden. So kann der Fachmann die positiven Polarisationsladungen von der Erdung elektrisch isoliert an die Auswerteeinheit ableiten. Dies kann durch eine stoffschlüssige elektrische Verbindung wie Crimpen, usw. der Sensorgehäuseanordnung mit einer Abschirmung des Signalkabels und durch eine elektrische Verbindung wie Crimpen, usw. der elektromagnetischen Abschirmung mit dem Leiterplattengehäuse erfolgen.

Eine vordere Oberfläche des Ladungsabgriffs 23.1 ist derart im flächigen elektrischen Kontakt mit einer ladungsabgebenden hinteren Oberfläche des zweiten Auflageelementes 22.3, das auch bei Normalkrafteinwirkung keine nichtkontaktierte Bereiche mit lokalen hohen elektrischen Spannungen und elektrischen Kriechströmen auftreten. In den Ausführungsformen der Sensoranordnung 2 nach Fig. 3 und 4 ist der flächige elektrische Kontakt von Ladungsabgriff 23.1 und zweitem Auflageelement 22.3 durch einen flächigen mechanischen Kontakt realisiert. In der Ausführungsform der Sensoranordnung 2 nach Fig. 5 ist der flächige elektrische Kontakt von Ladungsabgriff 23.1 und zweitem Auflageelement 22.3 durch eine mechanische Verbindung von Ladungsabgriff 23.1 und zweitem Auflageelement 22.3 realisiert. Die mechanische Verbindung erfolgt durch Stoffschluss wie Schweissen, Diffusionsschweissen, Thermokompressionsbonden, Löten, usw.. In der Ausführungsform der Sensoranordnung 2 nach Fig. 6 ist der flächige elektrische Kontakt von Ladungsabgriff 23.1 und zweitem Auflageelement 22.3 durch einen Ladungsabgriff 23.1 realisiert, der mit dem zweiten Auflageelement 22.3 einstückig hergestellt ist.

Die Elektrodenanordnung 23 ist durch einen ersten elektrischen Isolationskörper 25 gegenüber dem Versteifungsgehäuse 20.2 elektrisch isoliert. Der erste elektrische Isolationskörper 25 ist hohlzylinderförmig und besteht aus elektrisch isolierendem und mechanisch steifem Material wie Keramik, Al₂O₃-Keramik, Saphir, usw.. Der erste elektrische Isolationskörper 25 ist auf der von der Membran 21 abgewandten Seite des Ladungsabgriffs 23.1 auf der Längsachse CC' direkt hinter dem Ladungsabgriff 23.1 angeordnet. In der Ausführungsform der Sensoranordnung 2 nach Fig. 3 ist der erste elektrische Isolationskörper 25 im flächigen mechanischen Kontakt mit dem Ladungsabgriff 23.1. In den Ausführungsformen der Sensoranordnung 2 nach Fig. 4 bis 6 ist der erste elektrische Isolationskörper 25 mechanisch mit dem Ladungsabgriff 23.1 verbunden. Die mechanische Verbindung erfolgt durch Stoffschluss wie Schweissen, Diffusionsschweissen, Thermokompressionsbonden, Löten, usw..

Ein Kompensationselement 26 kompensiert unterschiedliche thermische Ausdehnungskoeffizienten der Bestandteile des piezoelektrischen Drucksensors 1. Das Kompensationselement 26 ist hohlzylinderförmig und besteht aus mechanisch steifem Material wie aus Reinmetallen, Nickellegierungen, Kobaltlegierungen, Eisenlegierungen, Keramiken, Al₂O₃-Keramiken, Saphir, usw.. Das Kompensationselement 26 ist auf der von der Membran 21 abgewandten Seite des ersten elektrischen Isolationskörpers 25 auf der Längsachse CC' direkt hinter dem ersten elektrischen Isolationskörper 25 angeordnet. In der Ausführungsform der Sensoranordnung 2 nach Fig. 3 ist das Kompensationselement 26 im flächigen mechanischen Kontakt mit dem ersten elektrischen Isolationskörper 25. In den Ausführungsformen der Sensoranordnung 2 nach Fig. 4 bis 6 ist das Kompensationselement 26 mechanisch mit dem ersten elektrischen Isolationskörper 25 verbunden. Die mechanische Verbindung erfolgt durch Stoffschluss wie Schweissen, Diffusionsschweissen, Thermokompressionsbonden, Löten, usw.. Das Kompensationselement 26 ist optional und kann auch fehlen. Bei Kenntnis der vorliegenden Erfindung kann der Fachmann einen piezoelektrischen Drucksensor ohne Kompensationselement 26 realisieren, was figürlich nicht dargestellt ist. Das Kompensationselement 26 kann auch zwischen anderen Bestandteilen des piezoelektrischen Drucksensors 1 angeordnet sein, was ebenfalls figürlich nicht dargestellt ist. So kann das Kompensationselement 26 zwischen der Vorspannhülse 24.1 und dem piezoelektrischen Aufnehmer 22 oder zwischen dem piezoelektrischen Aufnehmer 22 und dem Ladungsabgriff 23.1 oder zwischen dem Ladungsabgriff 23.1 und dem ersten elektrischen Isolationskörper 25 oder zwischen dem ersten elektrischen Isolationskörper 25 und dem Vorspannkörper 24.2 angeordnet sein. Dabei kann das Kompensationselement 26 im flächigen mechanischen Kontakt mit diesen Bestandteilen des piezoelektrischen Drucksensors 1 sein.

Der piezoelektrische Aufnehmer 22 ist über eine Vorspannanordnung 24 mechanisch vorgespannt. Die Vorspannanordnung 24 weist einen hohlzylinderförmigen Vorspannkörper 24.2 und eine hohlzylinderförmige Vorspannhülse 24.1 auf. Die Vorspannanordnung 24 besteht aus mechanisch steifem Material wie aus Reinmetallen, Nickellegierungen, Kobaltlegierungen, Eisenlegierungen, usw.. Der piezoelektrische Aufnehmer 22 ist zwischen dem Vorspannkörper 24.2 und der Vorspannhülse 24.1 mechanisch vorgespannt. Der Vorspannkörper 24.2 ist auf der von der Membran 21 abgewandten Seite des Ladungsabgriffs 23.1 angeordnet. Der Vorspannkörper 24.2 ist auf der von der Membran 21 abgewandten Seite des Ladungsabgriffs 23.1 auf der Längsachse CC' direkt hinter dem Kompensationselement 26 angeordnet. Bei fehlendem Kompensationselement 26 ist der Vorspannkörper 24.2 auf der von der Membran 21 abgewandten Seite des Ladungsabgriffs 23.1 auf der Längsachse AA' direkt hinter dem ersten elektrischen Isolationskörper 25 angeordnet. In der Ausführungsform der Sensoranordnung 2 nach Fig. 3 ist das Kompensationselement 26 im flächigen mechanischen Kontakt mit dem Vorspannkörper 24.2. In den Ausführungsformen der Sensoranordnung 2 nach Fig. 4 bis 6 ist das Kompensationselement 26 mechanisch mit dem Vorspannkörper 24.2 verbunden. Die mechanische Verbindung erfolgt durch Stoffschluss wie Schweissen, Diffusionsschweissen, Thermokompressionsbonden, Löten, usw.. Somit sind der Ladungsabgriff 23.1 und der Vorspannkörper 24.2 durch den zwischen ihnen angeordneten ersten elektrischen Isolationskörper 25 gegeneinander elektrisch isoliert.

Ein mittlerer Bereich des Vorspannkörpers 24.2 ist vollumfänglich mit dem Versteifungsgehäuse 20.2 elektrisch und mechanisch verbunden. Eine bezüglich der Längsachse CC' äussere Oberfläche des Vorspannkörpers 24.2 ist mit einer bezüglich der Längsachse CC' inneren Oberfläche des Versteifungsgehäuses 20.2 elektrisch und mechanisch verbunden. Die elektrische und mechanische Verbindung erfolgt vorzugsweise durch Stoffschluss wie Schweissen, Diffusionsschweissen, Thermokompressionsbonden, Löten, usw.. Ein vorderer Rand des Vorspannkörpers 24.2 ist vollumfänglich mit einem hinteren Ende der Vorspannhülse 24.1 mechanisch verbunden. Die mechanische Verbindung erfolgt durch Stoffschluss wie Schweissen, Diffusionsschweissen, Thermokompressionsbonden, Löten, usw.. In den Ausführungsformen einer Sensoranordnung 2 nach Fig. 5 und 6 ist das vordere Ende der Vorspannhülse 24.1 zusätzlich mechanisch mit einer äusseren Oberfläche des ersten Auflageelementes 22.1 verbunden. Die Vorspannhülse 24.1 ist bezüglich der Längsachse CC' radial ausserhalb des piezoelektrischen Aufnehmers 22, des ersten elektrischen Isolationskörpers 25 und des Kompensationselementes 26 angeordnet. Die Vorspannhülse 24.1 ist bezüglich der Längsachse CC' radial innerhalb des Versteifungsgehäuses 20.2 angeordnet. Die Vorspannhülse 24.1 ist durch einen ersten Spalt vom Versteifungsgehäuse 20.2 beabstandet. Die Vorspannhülse 24.1 ist durch einen zweiten Spalt vom piezoelektrischen Aufnehmer 22, dem Ladungsabgriff 23.1, dem ersten elektrischen Isolationskörper 25 und dem Kompensationselement 26 beabstandet. Ein vorderes Ende der Vorspannhülse 24.1 ist vollumfänglich mit einem hinteren Rand der Membran 21 mechanisch verbunden. Die mechanische Verbindung erfolgt durch Stoffschluss wie Schweissen, Diffusionsschweissen, Thermokompressionsbonden, Löten, usw.. Die Vorspannanordnung 24 spannt den piezoelektrischen Aufnehmer 22, den Ladungsabgriff 23.1, den ersten elektrischen Isolationskörper 25 und das Kompensationselement 26 mechanisch vor. Die mechanische Vorspannung ist eine mechanisch kraftschlüssige Verbindung.

In der Ausführungsform der Sensoranordnung 2 nach Fig. 3 ist die Elektrodenanordnung 23 durch eine elektrische Durchführungsanordnung 27 gegenüber dem Versteifungsgehäuse 20.2 elektrisch isoliert. Die Ausführungsformen der Sensoranordnung 2 nach Fig. 4 bis 6 weisen keine solche elektrische Durchführungsanordnung 27 auf. Die elektrische Durchführungsanordnung 27 weist ein erstes Adapterelement 27.1, einen zweiten elektrischen Isolationskörper 27.2 und ein zweites Adapterelement 27.3 auf. Die Durchführungsanordnung 27 ist auf der von der Membran 21 abgewandten Seite des Vorspannkörpers 24.2 auf der Längsachse CC' direkt hinter dem Vorspannkörper 24.2 angeordnet.

Das erste Adapterelement 27.1 ist hohlzylinderförmig und besteht aus mechanisch steifem Material wie aus Reinmetallen, Nickellegierungen, Kobaltlegierungen, Eisenlegierungen, usw.. Das erste Adapterelement 27.1 ist auf der von der Membran 21 abgewandten Seite des Vorspannkörpers 24.2 auf der Längsachse CC' direkt hinter dem Vorspannkörper 24.2 angeordnet. Ein vorderer Rand des ersten Adapterelementes 27.1 ist vollumfänglich mit einem hinteren Ende des Vorspannkörpers 24.2 mechanisch verbunden. Die mechanische Verbindung erfolgt durch Stoffschluss wie Schweissen, Diffusionsschweissen, Thermokompressionsbonden, Löten, usw.. Bei diesem Stoffschluss wird eine Paarung bevorzugt, bei welcher das erste Adapterelement 27.1 aus Titan besteht und bei welcher der Vorspannkörper 24.2 aus einer Eisenlegierung mit der Werkstoffnummer 1.4552 besteht, welche Paarung auch bei hohen Temperaturen während der Bewerkstelligung des Stoffschlusses richtungsunabhängig geringe Differenzen bei den thermischen Längenausdehnungskoeffizienten hat. Vorzugsweise ist diese Differenz dieser Paarung kleiner 10ppm, vorzugsweise kleiner 5ppm.

Der zweite elektrische Isolationskörper 27.2 isoliert das zweite Adapterelement 27.3 elektrisch gegenüber dem Versteifungsgehäuse 20.2. Der zweite elektrische Isolationskörper 27.2 ist hohlzylinderförmig und besteht aus elektrisch isolierendem und mechanisch steifem Material wie Keramik, Al₂O₃-Keramik, Saphir, usw.. Der zweite elektrische Isolationskörper 27.2 ist auf der von der Membran 21 abgewandten Seite des ersten Adapterelementes 27.1 auf der Längsachse CC' direkt hinter dem ersten Adapterelement 27.1 angeordnet. Ein hinterer Rand des ersten Adapterelementes 27.1 ist vollumfänglich mit einem vorderen Ende des zweiten elektrischen Isolationskörpers 27.2 mechanisch verbunden. Die mechanische Verbindung erfolgt durch Stoffschluss wie Diffusionsschweissen, Thermokompressionsbonden, Löten, usw.. Bei diesem Stoffschluss wird eine Paarung bevorzugt, bei welcher das erste Adapterelement 27.1 aus Titan besteht und bei welcher der zweite elektrische Isolationskörper 27.2 aus Al₂O₃-Keramik besteht, welche Paarung auch bei hohen Temperaturen während der Bewerkstelligung des Stoffschlusses richtungsunabhängig geringe Differenzen bei den thermischen Längenausdehnungskoeffizienten hat. Vorzugsweise ist diese Differenz dieser Paarung kleiner 5ppm, vorzugsweise kleiner 3ppm.

Die Ladungsableitung 23.2 ist elektrisch und mechanisch mit dem zweiten Adapterelement 27.3 verbunden. Das zweite Adapterelement 27.3 ist hohlzylinderförmig und besteht aus elektrisch leitfähigem Material wie aus Reinmetallen, Nickellegierungen, Kobaltlegierungen, Eisenlegierungen, usw.. Das zweite Adapterelement 27.3 ist auf der von der Membran 21 abgewandten Seite des zweiten elektrischen Isolationskörpers 27.2 auf der Längsachse CC' direkt hinter dem zweiten elektrische Isolationskörper 27.2 angeordnet. Ein vorderes Ende des zweiten Adapterelementes 27.3 ist vollumfänglich mit einem hinteren Ende des zweiten elektrischen Isolationskörpers 27.2 mechanisch verbunden. Die mechanische Verbindung erfolgt durch Stoffschluss wie Diffusionsschweissen, Thermokompressionsbonden, Löten, usw.. Bei diesem Stoffschluss wird eine Paarung bevorzugt, bei welcher das zweite Adapterelement 27.3 aus einer Eisenlegierung mit der Werkstoffnummer 1.3981 oder 1.3982 besteht, und bei welcher der zweite elektrische Isolationskörper 27.2 aus Al₂O₃-Keramik besteht, welche Paarung auch bei hohen Temperaturen während der Bewerkstelligung des Stoffschlusses richtungsunabhängig geringe Differenzen bei den thermischen Längenausdehnungskoeffizienten hat. Vorzugsweise ist diese Differenz dieser Paarung kleiner 5ppm, vorzugsweise kleiner 3ppm.

Die Ladungsableitung 23.2 erstreckt sich auf der Längsachse CC' zentral durch den ersten elektrischen Isolationskörper 25, das Kompensationselement 26, den Vorspannkörper 24.2 und die elektrische Durchführungsanordnung 27. Die Ladungsableitung 23.2 ist bezüglich der Längsachse CC' radial durch einen dritten Spalt vom ersten elektrischen Isolationskörper 25, vom Kompensationselement 26, vom Vorspannkörper 24.2, vom ersten Adapterelement 27.1 und vom zweiten elektrischen Isolationskörper 27.2 beabstandet. Durch die Beabstandung ist die Ladungsableitung 23.2 von diesen Bestandteilen elektrisch isoliert. Ein hinteres Ende des zweiten Adapterelementes 27.3 ist vollumfänglich mit einem mittleren Bereich der Ladungsableitung 23.2 elektrisch und mechanisch verbunden. Die mechanische Verbindung ist direkt und erfolgt durch Stoffschluss wie Schweissen, Diffusionsschweissen, Thermokompressionsbonden, Löten, usw.. Ein hinteres Ende der Ladungsableitung 23.2 ragt auf der Längsachse CC' aus dem zweiten Adapterelement 27.3 hinaus. Bei Kenntnis der vorliegenden Erfindung hat der Fachmann vielfältige Möglichkeiten der Variation dieser Ausführungsform. So können die Ladungsableitung und das zweite Adapterelement auch einstückig hergestellt sein. In einer solchen Ausführung sind der Ladungsabgriff und die Ladungsableitung aus Montagegründen dann zweiteilig, um die Ladungsableitung so anzuordnen, dass sie sich zentral durch das erste Isolationselement, das Kompensationselement und den Vorspannkörper erstreckt. Auch kann die mechanische Verbindung zwischen der Ladungsableitung und dem zweiten Adapterelement indirekt erfolgen, indem eine Zwischenhülse zwischen der Ladungsableitung und dem zweiten Adapterelement angeordnet ist und stoffschlüssig mit der Ladungsableitung und dem zweiten Adapterelement verbunden wird. Auch bei diesen Stoffschlüssen werden Paarungen von Zwischenhülse mit Ladungsableitung und von Zwischenhülse mit dem zweiten Adapterelement bevorzugt, welche Paarungen geringe Differenzen bei den thermischen Längenausdehnungskoeffizienten hat. Vorzugsweise sind die Differenzen dieser Paarungen kleiner 10ppm, vorzugsweise kleiner 5ppm, vorzugsweise kleiner 3ppm.

Die Elektrodenanordnung 23 stützt sich auf dem mit dem Versteifungsgehäuse 20.2 mechanisch verbundenen Vorspannkörper 24.2 ab.
a. In einem ersten Stützbereich stützt sich der Ladungsabgriff 23.1 über den ersten elektrischen Isolationskörper 25 und das Kompensationselement 26 mechanisch auf dem Vorspannkörper 24.2 ab. In der Ausführungsform der Sensoranordnung 2 nach Fig. 3 sind der Ladungsabgriff 23.1, der erste elektrische Isolationskörper 25, das Kompensationselement 26 und der Vorspannkörper 24.2 mechanisch miteinander kontaktiert. In der Ausführungsform der Sensoranordnung 2 nach Fig. 4 bis 6 sind der Ladungsabgriff 23.1, der erste elektrische Isolationskörper 25, das Kompensationselement 26 und der Vorspannkörper 24.2 mechanisch miteinander verbunden. Mindestens eine mechanische Verbindung des ersten Stützbereiches ist eine stoffschlüssige Verbindung, welche druckdicht ist. Es ist durchaus vorteilhaft, wenn alle mechanischen Verbindungen des ersten Stützbereiches stoffschlüssige Verbindungen sind, die druckdicht sind.
b. In der Ausführungsform der Sensoranordnung 2 nach Fig. 3 stützt sich die Ladungsableitung 23.2 in einem zweiten Stützbereich auf der elektrischen Durchführungsanordnung 27 mechanisch ab, wobei die Ladungsableitung 23.2, die elektrische Durchführungsanordnung 27 und der Vorspannkörper 24.2 mechanisch miteinander verbunden sind. Mindestens eine mechanische Verbindung des zweiten Stützbereiches ist eine stoffschlüssige Verbindung, welche druckdicht ist. Es ist durchaus vorteilhaft, wenn alle mechanischen Verbindungen des zweiten Stützbereiches stoffschlüssige Verbindungen sind, die druckdicht sind.
c. In den Ausführungsformen der Sensoranordnung 2 nach Fig. 3 bis 6 stützt sich der Ladungsabgriff 23.1 in einem dritten Stützbereich über den piezoelektrischen Aufnehmer 22 auf der Vorspannhülse 24.1 mechanisch ab, wobei der Ladungsabgriff 23.1, der piezoelektrische Aufnehmer 22, die Vorspannhülse 24.1 und der Vorspannkörper 24.2 mechanisch miteinander verbunden sind. Mindestens eine mechanische Verbindung des dritten Stützbereiches ist eine stoffschlüssige Verbindung, welche druckdicht ist. Es ist durchaus vorteilhaft, wenn alle mechanischen Verbindungen des dritten Stützbereiches stoffschlüssige Verbindungen sind, die druckdicht sind.
Diese mehrfache mechanische Abstützung in mehreren räumlich auf der Längsachse CC' voneinander beanstandeten Stützbereichen erhöht die mechanische Stabilität der Signalableitung. Dabei ist es vorteilhaft, wenn alle mechanischen Verbindungen der Sensoranordnung 2 stoffschlüssige Verbindungen sind.

Bei einem Bersten der Membran 21 können heisse Gase aus der Druckkammer in den ersten Spalt zwischen der Vorspannhülse 24.1 einerseits und dem Versteifungsgehäuse 20.2 andererseits gelangen. Wenn nun die Vorspannhülse 24.1 durch die heissen Gase beschädigt wird, können die heissen Gase in den zweiten Spalt zwischen der Vorspannhülse 24.1 einerseits und dem piezoelektrischen Aufnehmer 22, dem Ladungsabgriff 23.1, dem ersten elektrischen Isolationskörper 25 und dem Kompensationselement 26 andererseits gelangen. Da die Elektrodenanordnung 23 über die Ladungsableitung 23.2 mechanisch mit der elektrischen Durchführungsanordnung 27 und dem Vorspannkörper 24.2 verbunden ist, dichtet die Elektrodenanordnung 23 den ersten elektrischen Isolationskörper 25 und das Kompensationselement 26 in der Ausführungsform der Sensoranordnung 2 nach Fig. 3 derart ab, dass heisse Gase nur sehr langsam in den dritten Spalt zwischen der Ladungsableitung 23.2 einerseits und dem ersten elektrischen Isolationskörper 25, dem Kompensationselement 26 und dem Vorspannkörper 24.2 andererseits gelangen. Unter dieser Abdichtung wird eine Druckfestigkeit gegenüber dem mittleren indizierten Zylinderdruck des Verbrennungsmotors verstanden. Der mittlere indizierte Zylinderdruck wird auch indizierter Mitteldruck genannt und liegt im Bereich von 1/3 bis 1/8 des Maximums der schnellen Druckverläufe von 150 bis 250 bar. Der mittlere indizierte Zylinderdruck ist der Druck, der sich bei einem Bersten der Membran 21 und bei einer Beschädigung der Vorspannhülse 24.1 im zeitlichen Mittel im zweiten Spalt einstellt. Der flächige mechanische Kontakt zwischen dem Ladungsabgriff 23.1 und dem ersten elektrischen Isolationskörper 25 dichtet den dritten Spalt durch Formschluss vom zweiten Spalt ab. Der flächige mechanische Kontakt zwischen dem ersten elektrischen Isolationskörper 25 und dem Kompensationselement 26 dichtet den dritten Spalt durch Formschluss vom zweiten Spalt ab. Der flächige mechanische Kontakt zwischen dem Kompensationselement 26 und dem Vorspannkörper 24.2 dichtet dritten Spalt durch Formschluss vom zweiten Spalt ab. Bei fehlendem Kompensationselement 26 dichtet die Elektrodenanordnung 23 nur den ersten elektrischen Isolationskörper 25 derart ab, dass heisse Gase nicht in den dritten Spalt gelangen. Der flächige mechanische Kontakt zwischen dem Ladungsabgriff 23.1 und dem ersten elektrischen Isolationskörper 25 dichtet den dritten Spalt durch Formschluss vom zweiten Spalt ab. Der flächige mechanische Kontakt zwischen dem ersten elektrischen Isolationskörper 25 und dem Vorspannkörper 24.2 dichtet den dritten Spalt durch Formschluss vom zweiten Spalt ab. Wenn nun heisse Gase auch den ersten elektrischen Isolationskörper 25 zerstören, so dass dieser in eine Vielzahl kleine Bruchstücke zerbricht und heisse Gase in den dritten Spalt gelangen, so ist der dritte Spalt in der Ausführungsform der Sensoranordnung 2 nach Fig. 3 durch den zweiten Stützbereich druckdicht von der Umgebung getrennt. In den Ausführungsformen der Sensoranordnung 2 nach Fig. 4 bis 6 ist der dritte Spalt durch den ersten Stützbereich druckdicht von der Umgebung getrennt. Somit können bei einem Bruch der Membran keine heissen Gase in die Umgebung entweichen.

Fig. 7 und 8 zeigen einen vergrösserten Schnitt durch einen Teil der Sensoranordnung 2 und der Signalkabelanordnung 4 des einsatzfertig montierten piezoelektrischen Drucksensors 1 nach Fig. 1 oder 2. Fig. 7 ist ein Vollschnitt mit der Vertikalachse AA' des piezoelektrischen Drucksensors 1 als Schnittlinie A÷A'. Fig. 8 ist ein Vollschnitt mit der Horizontalachse BB' des piezoelektrischen Drucksensors 1 als Schnittlinie B÷B'. Fig. 7 und 8 zeigen das Verbindungselementgehäuse 40, das Signalkabel 41, den Stützkörper 42 und das elektrische Verbindungselement 43 der Signalkabelanordnung 4.

Das elektrische Verbindungselement 43 der Signalkabelanordnung 4 ist hohlzylinderförmig. Das elektrische Verbindungselement 43 besteht aus elektrisch leitfähigem Material wie aus Reinmetallen, Nickellegierungen, Kobaltlegierungen, Eisenlegierungen, usw.. Die Ladungsableitung 23.2 ist mit dem elektrischen Verbindungselement 43 zusammengeführt. Das hintere Ende der Ladungsableitung 23.2 ragt auf der Längsachse CC' in das elektrische Verbindungselement 43 hinein. In diesem Bereich sind eine bezüglich der Längsachse CC' äussere Oberfläche der Ladungsableitung 23.2 und eine bezüglich der Längsachse CC' innere Oberfläche des elektrischen Verbindungselementes 43 elektrisch und mechanisch miteinander verbunden. Die elektrische und mechanische Verbindung erfolgt durch Stoffschluss wie Schweissen, Diffusionsschweissen, Thermokompressionsbonden, Löten, Crimpen, usw.. Die Ladungsableitung 23.2 ist bereichsweise im Stoffschluss mit dem elektrischen Verbindungselement 43. Der bereichsweise Stoffschluss kann durch Punktschweissung oder vollumfängliche Linienschweissung erfolgen. Bei Kenntnis der vorliegenden Erfindung kann der Fachmann natürlich auch ein anders geformtes elektrisches Verbindungselement 43 verwenden. So kann das elektrische Verbindungselement 43 plattenförmig oder halbschalenförmig sein. Die Ladungsableitung 23.2 ragt dann nicht in das elektrische Verbindungselement 43 hinein. Für die Herstellung der elektrischen und mechanischen Verbindung wird die Ladungsableitung 23.2 dann auf das plattenförmige oder halbschalenförmige elektrische Verbindungselement 43 gelegt.

Im Stützkörper 42 der Signalkabelanordnung 4 ist ein vorderes Ende des Signalkabels 41 angeordnet. Der Stützkörper 42 ist hohlzylinderförmig und besteht aus mechanisch beständigem Material wie aus Reinmetallen, Nickellegierungen, Kobaltlegierungen, Eisenlegierungen, usw.. Ein hinterer Bereich des Stützkörpers 42 ist vollumfänglich mit einem hinteren Rand des Verbindungselementgehäuses 40 mechanisch verbunden. Die mechanische Verbindung erfolgt durch Stoffschluss wie Schweissen, Diffusionsschweissen, Thermokompressionsbonden, Löten, usw.. Ein vorderer Bereich des Stützkörpers 42 weist einen Stützkörperrahmen 42.1 auf. Der Stützkörperrahmen 42.1 weist mindestens ein Fenster auf. Wie in der Ansicht nach Fig. 10 dargestellt, besteht der Stützkörperrahmen 42.1 aus zwei parallel zur Längsachse CC' orientierte Streben zwischen denen auf der Vertikalachse BB' zwei Fenster liegen. Durch die Fenster ist das elektrische Verbindungselement 43 von aussen zugänglich und mit einem Fügewerkzeug erreichbar. Ein vorderer Rand des Verbindungselementgehäuses 40 ist vollumfänglich mit einem hinteren Rand des Sensorgehäuses 2 mechanisch verbunden. Die mechanische Verbindung erfolgt durch Stoffschluss wie Schweissen, Diffusionsschweissen, Thermokompressionsbonden, Löten, usw..

Das Signalkabel 41 weist einen elektrischen Signalleiter 41.1, ein elektrisches Isolationselement 41.2 und einen Signalkabelmantel 41.3 auf. Eine bezüglich der Längsachse CC' äussere Oberfläche eines vorderen Endes des Signalkabelmantels 41.3 ist mit einer bezüglich der Längsachse CC' inneren Oberfläche des Stützkörpers 42 der Signalkabelanordnung 4 mechanisch verbunden. Beliebige mechanische Verbindungen wie Stoffschluss, Formschluss und Kraftschluss sind möglich, dabei wird ein Crimpen bevorzugt. Der elektrische Signalleiter 41.1 besteht aus elektrisch leitfähigem Material wie aus Reinmetallen, Nickellegierungen, Kobaltlegierungen, Eisenlegierungen, usw.. Ein vorderes Ende des elektrischen Signalleiters 41.1 und ein hinteres Ende des elektrischen Verbindungselementes 43 sind elektrisch und mechanisch miteinander verbunden. Beliebige elektrische und mechanische Verbindungen wie Stoffschluss, Formschluss und Kraftschluss sind möglich. Das elektrische Isolationselement 41.2 ist hohlzylinderförmig und besteht aus thermisch bis zu Temperaturen von mindestens 200°C beständigem, elektrisch isolierendem Material wie Polytetrafluorethylen, Polyimid, Hexafluorpropylenvinylidenfluorid-Copolymer (FKM), usw.. Das elektrische Isolationselement 41.2 umschliesst den Verbindungsbereich zwischen dem elektrischen Verbindungselement 43 und dem elektrischen Signalleiter 41.1 vollumfänglich und es umschliesst den elektrischen Signalleiter 41.1 vollumfänglich. Das elektrische Isolationselement 41.2 isoliert das elektrische Verbindungselement 43 und den elektrischen Signalleiter 41.1 elektrisch gegenüber dem Stützkörper 42. Das elektrische Isolationselement 41.2 dämpft auch Motorvibrationen.

Fig. 9 zeigt einen Ausschnitt der Sensoranordnung 2 und der Signalkabelanordnung 4 des piezoelektrischen Drucksensors 1 nach Fig. 7 oder 8. Das elektrische Verbindungselement 43 weist auf einer äusseren Oberfläche ein erstes Rastierelement 43.00 auf, das beispielsweise als radial vorstehende Nase 43.00 ausgeführt ist. Das elektrische Isolationselement 41.2 weist auf einer inneren Oberfläche ein zweites Rastierelement 41.20 auf, das beispielsweise als Nut 41.20 ausgeführt ist. Das erste Rastierelement 43.00 und das zweite Rastierelement 41.20 bilden einen Form- oder Berührschluss mit Spiel. Der Form- oder Berührschluss wird automatisch beim Einschieben des elektrischen Verbindungselementes 43 in das elektrische Isolationselement 41.2 gebildet. Die Nut verläuft schräg zur Längsachse CC'. Nut und Nase sind zueinander passend ausgeführt, die Nase ragt in die Nut. Das Spiel verhindert die Übertragung von Motorvibrationen vom elektrischen Signalleiter 41.1 auf die Ladungsableitung 23.2, welche übertragenen Motorvibrationen auf das piezoelektrische Aufnehmerelement 22.2 wirken und elektrische Polarisationsladungen erzeugen können, wodurch die Erfassung des Druckverlaufs verfälscht werden kann. Das Spiel ist grösser als 5 µm. Das Spiel ermöglicht kleine Relativbewegungen zwischen dem elektrischen Verbindungselement 43 und dem elektrischen Isolationselement 41.2. Bei Kenntnis der vorliegenden Erfindung kann der Fachmann natürlich andere Ausführungen von Rastierelementen realisieren, so kann das erste Rastierelement eine Nut sein und das zweite Rastierelement kann eine Nase sein.

Der elektrische Signalleiter 41.1 und das elektrische Isolationselement 41.2 erstrecken sich in Längsrichtung CC' parallel zum Signalkabelmantel 41.3. Der Signalkabelmantel 41.3 schützt den elektrischen Signalleiter 41.1 und das elektrische Isolationselement 41.2 vor schädlichen Umwelteinflüssen wie Verunreinigungen (Staub, Feuchtigkeit, usw.). Das Signalkabel 41 kann eine koaxiale elektromagnetische Abschirmung aufweisen und den Signalleiter 41.1 vor elektrischen und elektromagnetischen Störeffekten in Form von elektromagnetischer Strahlung schützen und somit eine elektromagnetische Verträglichkeit des piezoelektrischen Drucksensors 1 ermöglichen. Das Signalkabel 41 kann mehrere Zentimeter lang sein, es kann aber auch mehrere Meter lang sein.

Das Signalkabelanordnung 4 kann aber auch vollständig fehlen, so dass die Sensoranordnung 2 direkt mit der Auswerteeinheit 5 elektrisch und mechanisch verbunden ist. Dann ist die Ladungsableitung 23.2 stoffschlüssig mit dem elektrischen Verbindungselement 53 der Auswerteeinheit 5 verbunden. Das Sensorgehäuse 20.1 ist dann einstückig mit dem Stützkörper 52 der Auswerteeinheit 5. Das Leiterplattengehäuse 50 ist dann anstelle des Verbindungselementgehäuses 40 mechanisch mit dem Sensorgehäuse 20.1 verbunden. Diese Ausführungsform kann dann die Merkmale der Beschreibung zur Fig. 10 aufweisen, so dass der Stützkörper 52 der Auswerteeinheit 5 einen Stützkörperrahmen mit mindestens einem Fenster aufweist, durch welches Fenster das elektrische Verbindungselement von aussen zugänglich und mit einem Fügewerkzeug erreichbar ist. Diese Ausführungsform kann dann auch die Merkmale der Beschreibung zur Fig. 9 aufweisen, wo ein erstes Rastierelement der Stützhülse 52 der Auswerteeinheit 5 mit einem zweiten Rastierelement eines elektrischen Isolationselementes der Auswerteeinheit 5 einen Form- oder Berührschluss mit Spiel bilden kann.

Ein hinteres Ende des Signalkabels 41 ist elektrisch und mechanisch mit der Auswerteinheit 5 verbunden. Dazu weist die Auswerteinheit 5 den Stützkörper 52 auf. Der Stützkörper 52 ist hohlzylinderförmig und besteht aus mechanisch beständigem Material wie Edelstahl, Stahllegierungen, usw.. Wie in Fig. 1 und 2 dargestellt, ist ein hinterer Rand des Stützkörpers 52 vollumfänglich mit einem vorderen Rand des Leiterplattengehäuses 50 mechanisch verbunden. Die mechanische Verbindung erfolgt durch Stoffschluss wie Schweissen, Diffusionsschweissen, Thermokompressionsbonden, Löten, usw.. Eine bezüglich der Längsachse CC' äussere Oberfläche eines hinteren Endes des Signalkabelmantels 41.3 ist mit einer bezüglich der Längsachse CC' inneren Oberfläche des Stützkörpers 52 der Auswerteeinheit 5 bereichsweise mechanisch verbunden. Beliebige mechanische Verbindungen wie Stoffschluss, Formschluss und Kraftschluss sind möglich, dabei wird ein Crimpen bevorzugt. Ein hinteres Ende des elektrischen Signalleiters 41.1 des Signalkabels 41 ist über das elektrische Verbindungselement 53 elektrisch und mechanisch mit dem elektrischen Signalleiter 51.1 der Leiterplatte 51 verbunden. Beliebige elektrische und mechanische Verbindungen wie Stoffschluss, Formschluss und Kraftschluss sind möglich. Das elektrische Verbindungselement 53 und der elektrische Signalleiter 51.1 können einstückig sein. Von der Elektrodenanordnung 23 abgenommene Signale werden über die Ladungsableitung 23.2 zum elektrischen Verbindungselement 43 der Signalkabelanordnung 4 abgeleitet und vom elektrischen Verbindungselement 43 der Signalkabelanordnung 4 über den elektrischen Signalleiter 41.1 des Signalkabels 41 und das elektrische Verbindungselement 53 an den elektrischen Signalleiter 51.1 der Leiterplatte 51 abgeleitet und dort elektrisch verstärkt und ausgewertet. Die Signale sind proportional zur Grösse des von der Membran 21 erfassten Druckverlaufs. Natürlich können die Leiterplatte und der elektrische Signalleiter der Leiterplatte auch Bestandteile der Signalkabelanordnung sein.

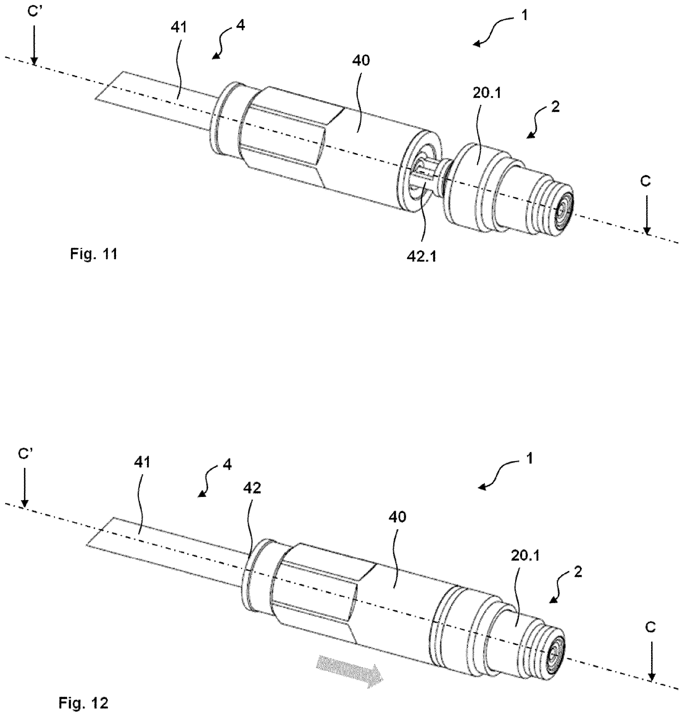

Die Fig. 11 und 12 zeigen Schritte des Verfahrens zur Herstellung des piezoelektrischen Drucksensors 1. Die Ausführungsform der Sensoranordnung 2 nach Fig. 3 und die Signalkabelanordnung 4 werden als separate Halbzeuge hergestellt. Dies hat den Vorteil, dass Varianten der Sensoranordnung 2 mit Varianten der Signalkabelanordnung 4 oder direkt mit der Auswerteeinheit 5 zu einem piezoelektrischen Drucksensors 1 herstellbar sind, wodurch die Herstellung kostengünstig ist. Varianten der Sensoranordnung 2 umfassen Membrane 21 mit verschiedenen Membranstärken, und/oder piezoelektrische Aufnehmer 22 mit verschiedenen Einsatztemperaturbereichen. Varianten der Signalkabelanordnung 4 umfassen Signalkabel 41 mit unterschiedliche Längen und/oder Signalkabel 41 mit oder ohne elektromagnetische Abschirmung und/oder sehr kurze Signalkabel 41. Als weitere Variante kann die Sensoranordnung 2 ohne Signalkabelanordnung 4 direkt mit der Auswerteieinheit 5 mechanisch und elektrisch verbunden sein.

Die Sensoranordnung 2 weist die in der Sensorgehäuseanordnung 20 angeordnete Membran 21, den piezoelektrischen Aufnehmer 22, die Elektrodenanordnung 23, die Vorspannanordnung 24, den ersten elektrischen Isolationskörper 25, das Kompensationselement 26, die elektrische Durchführungsanordnung 27 und das Versteifungsgehäuse 20.2 auf. Die Signalkabelanordnung 4 weist das Verbindungselementgehäuse 40, das Signalkabel 41, den Stützkörper 42 und das elektrische Verbindungselement 43 auf. Im Stützkörper 42 sind das elektrische Verbindungselement 43 und das vordere Ende des Signalkabels 41 angeordnet. Das Verbindungselementgehäuse 40 ist auf der Längsachse CC' über den Stützkörper 42 geschoben und liegt mit einem Verbindungselementgehäuseabsatz 40.1 im mechanischen Kontakt aussenseitig an einem hinteren Ende des Stützkörpers 42 an. In der Ansicht nach Fig. 11 ist der hintere Bereich des Stützkörpers 42 daher vom Verbindungselementgehäuse 40 verdeckt, während der vordere Bereich des Stützkörpers 42 mit dem Stützkörperrahmen 42.1 von aussen sichtbar und zugänglich ist.

In einem ersten Verfahrensschritt wird das hintere Ende der Ladungsableitung 23.2 auf der Längsachse CC' in das elektrische Verbindungselement 43 geschoben, so dass das hintere Ende der Ladungsableitung 23.2 in das elektrische Verbindungselement 43 hineinragt und die bezüglich der Längsachse CC' äussere Oberfläche der Ladungsableitung 23.2 und die bezüglich der Längsachse CC' innere Oberfläche des elektrischen Verbindungselementes 43 bereichsweise im mechanischen Kontakt sind.

In einem weiteren Verfahrensschritt werden die äussere Oberfläche der Ladungsableitung 23.2 und die innere Oberfläche des elektrischen Verbindungselementes 43 bereichsweise elektrisch und mechanisch miteinander verbunden. Die elektrische und mechanische Verbindung erfolgt durch Stoffschluss wie Schweissen, Diffusionsschweissen, Thermokompressionsbonden, Löten, usw.. Dazu stellt ein Fügewerkzeug durch die Fenster des Stützkörperrahmens 42.1 den Stoffschluss zwischen der Ladungsableitung 23.2 und dem elektrischen Verbindungselement 43 her. Das Fügewerkzeug ist in Fig. 11 nicht dargestellt. Das Fügewerkzeug kann aus Elektroden einer elektrischen Widerstandsschweissanlage bestehen, es kann aber auch ein Crimpwerkzeug, ein Laser, usw. sein.

In einem noch weiteren Verfahrensschritt wird das Verbindungselementgehäuse 40 auf der Längsachse CC' gegen das Sensorgehäuse 20 verschoben, so dass wie in Fig. 7 und 8 dargestellt der vordere Rand des Verbindungselementgehäuses 40 mit dem hinteren Rand des Sensorgehäuses 2 im mechanischen Kontakt ist und von aussen zugänglich ist. Dieses Verschieben des Verbindungselementgehäuses 40 ist in Fig. 12 durch einen Pfeil dargestellt. Dadurch ist der hintere Bereich des Stützkörpers 42 wie in Fig. 7 und 8 dargestellt mit dem hinteren Rand des Verbindungselementgehäuse 40 weitgehend bündig und von aussen zugänglich, während nun der vordere Bereich des Stützkörpers 42 mit dem Stützkörperrahmens 42.1 verdeckt ist.

Nun wird in einem weiteren Verfahrensschritt das Verbindungselementgehäuse 40 bereichsweise mit dem Sensorgehäuse 20.1 verbunden. Vorzugsweise wird der vordere Rand des Verbindungselementgehäuses 40 mit dem hinteren Rand des Sensorgehäuses 20.1 vollumfänglich mechanisch miteinander verbunden. Die mechanische Verbindung erfolgt durch Stoffschluss wie Schweissen, Diffusionsschweissen, Thermokompressionsbonden, Löten, usw.. Dazu stellt ein Fügewerkzeug den Stoffschluss zwischen dem vorderen Rand des Verbindungselementgehäuses 40 und dem hinteren Rand des Sensorgehäuses 20.1 her. Das Fügewerkzeug ist in Fig. 12 nicht dargestellt.

Und in noch einem weiteren Verfahrensschritt wird der Stützkörper 42 bereichsweise mit dem Verbindungselementgehäuse 40 mechanisch verbunden. Vorzugsweise wird der hintere Bereich des Stützkörpers 42 vollumfänglich mit dem hinteren Rand des Verbindungselementgehäuses 40 mechanisch verbunden. Die mechanische Verbindung erfolgt durch Stoffschluss wie Schweissen, Diffusionsschweissen, Thermokompressionsbonden, Löten, usw.. Dazu stellt ein Fügewerkzeug dem Stoffschluss zwischen dem hinteren Bereich des Stützkörpers 42 und dem hinteren Rand des Verbindungselementgehäuses 40 her. Das Fügewerkzeug ist in Fig. 12 nicht dargestellt.

Bei Kenntnis der vorliegenden Erfindung kann der Fachmann die verschiedenen Ausführungsformen miteinander kombinieren. So kann er die Ausführungsform der Sensoranordnungen nach Fig. 3 mit derjenigen der Fig. 4 und/oder Fig. 5 oder Fig. 6 kombinieren. So kann er einen piezoelektrischen Drucksensor realisieren, bei dem alle bei der Ableitung der Signale direkt beteiligten Bestandteile des piezoelektrischen Drucksensors über Stoffschluss miteinander verbunden sind. Auch kann er einen piezoelektrischen Drucksensor realisieren, bei dem alle mechanischen Verbindungen zwischen seinen Bestandteilen stoffschlüssige Verbindungen sind. Auch kann er einen piezoelektrischen Drucksensor realisieren, bei dem die Ladungsableitung direkt stoffschlüssig mit der elektrischen Leiterplatte verbunden ist.

### Bezugszeichenliste

- AA': Vertikalachse
- A÷A': Schnittlinie
- BB': Horizontalachse
- B÷B': Schnittlinie
- CC': Längsachse
- 1: piezoelektrischer Drucksensor
- 2: Sensoranordnung
- 4: Signalkabelanordnung
- 5: Auswerteeinheit
- 20: Sensorgehäuseanordnung
- 20.1: Sensorgehäuse
- 20.2: Versteifungshülse
- 21: Membran
- 22: piezoelektrischer Aufnehmer
- 22.1: erstes Auflageelement
- 22.2: piezoelektrisches Aufnehmerelement
- 22.3: zweites Auflageelement
- 23: Elektrodenanordnung
- 23.1: Ladungsabgriff
- 23.2: Ladungsableitung
- 24: Vorspannanordnung
- 24.1: Vorspannhülse
- 24.2: Vorspannkörper
- 25: erster elektrischer Isolationskörper
- 26: Kompensationselement
- 27: elektrische Durchführungsanordnung
- 27.1: erstes Adapterelement
- 27.2: zweiter elektrischer Isolationskörper
- 27.3: zweites Adapterelement
- 40: Verbindungselementgehäuse
- 40.1: Verbindungselementgehäuseabsatz
- 41: Signalkabel
- 41.1: elektrischer Signalleiter
- 41.2: elektrisches Isolatorelement
- 41.20: zweites Rastierelement
- 41.3: Signalkabelmantel
- 42: Stützkörper
- 42.1: Stützkörperrahmen
- 43: elektrisches Verbindungselement
- 43.00: erstes Rastierelement
- 50: Leiterplattengehäuse
- 51: elektrische Leiterplatte
- 51.1: elektrischer Signalleiter
- 52: Stützkörper
- 53: elektrisches Verbindungselement

## Patentansprüche

1. Piezoelektrischer Drucksensor (1); welcher in einer Sensoranordnung (2) eine Membran (21), eine Sensorgehäuseanordnung (20), einen piezoelektrischen Aufnehmer (22) und eine Elektrodenanordnung (23) aufweist; welche Sensoranordnung (2) in einem vorderen Bereich des piezoelektrischer Drucksensors (1) angeordnet ist; welche Membran (21), welcher piezoelektrischer Aufnehmer (22) und welche Elektrodenanordnung (23) in der Sensorgehäuseanordnung (20) angeordnet sind; welche Membran (21) einen Druckverlauf erfasst; auf welchem piezoelektrischen Aufnehmer (22) der erfasste Druckverlauf Polarisationsladungen erzeugt; welche Elektrodenanordnung (23) einen zylinderförmigen Ladungsabgriff (23.1) und eine stabförmige Ladungsableitung (23.2) aufweist, welcher Ladungsabgriff (23.1) erzeugte Polarisationsladungen abnimmt und über die welche Ladungsableitung (23.2) abgenommene Polarisationsladungen als Signale ableitet; welcher Ladungsabgriff (23.1) und welche Ladungsableitung (23.2) einstückig sind oder stoffschlüssig miteinander verbunden sind; welcher Drucksensor (1) auch einer Signalkabelanordnung aufweist (4), welche in einem an den vorderen Bereich des piezoelektrischen Drucksensors (1) anschliessenden Bereich einer Umgebung angeordnet ist; welche Signalkabelanordnung (4) ein Verbindungselementgehäuse (40), ein Signalkabel (41), einen Stützkörper (42) und ein elektrisches Verbindungselement (43) aufweist; welches Signalkabel (41) einen elektrischen Signalleiter (41.1) aufweist; welches elektrische Verbindungselement (43) im Verbindungselementgehäuse (40) angeordnet ist; und welches elektrische Verbindungselement (43) mit dem elektrischen Signalleiter (41.1) elektrisch und mechanisch verbunden ist; wobei das elektrische Verbindungselement (43) hohlzylinderförmig ist; dass ein von der Membran (21) abgewandtes Ende der Ladungsableitung (23.2) in das elektrische Verbindungselement (43) hineinragt; und dass eine äussere Oberfläche der Ladungsableitung (23.2) bereichsweise stoffschlüssig mit einer inneren Oberfläche der elektrischen Verbindungselement (43) verbunden ist und Signale über das elektrische Verbindungselement (43) in den elektrischen Signalleiter (41.1) ableitet.

2. Piezoelektrischer Drucksensor (1) nach Anspruch 1, **dadurch gekennzeichnet, dass** der piezoelektrische Drucksensor (1) einen Vorspannkörper (24.2) aufweist; dass der Vorspannkörper (24.2) auf einer von der Membran (21) abgewandten Seite des Ladungsabgriffs (23.1) angeordnet ist; und dass der Vorspannkörper (24.2) den piezoelektrischen Aufnehmer (22) mechanisch vorspannt.

3. Piezoelektrischer Drucksensor (1) nach Anspruch 2, **dadurch gekennzeichnet, dass** der Ladungsabgriff (23.1) und der Vorspannkörper (24.2) durch einen zwischen ihnen angeordneten ersten elektrischen Isolationskörper (25) gegeneinander elektrisch isoliert sind.

4. Piezoelektrischer Drucksensor (1) nach einem der Ansprüche 2 oder 3, **dadurch gekennzeichnet, dass** die Ladungsableitung (23.2) auf der von der Membran (21) abgewandten Seite des Ladungsabgriffs (23.1) angeordnet ist; dass sich die Ladungsableitung (23.2) zentral durch einen ersten elektrischen Isolationskörper (25) und den Vorspannkörper (24.2) erstreckt und durch einen dritten Spalt vom ersten elektrischen Isolationskörper (25) und vom Vorspannkörper (24.2) beabstandet ist; und dass sich die Ladungsableitung (23.2) auf der von der Membran (21) abgewandten Seite des Vorspannkörpers (24.2) auf einer elektrischen Durchführungsanordnung (27) mechanisch abstützt, welche elektrische Durchführungsanordnung (27) mit dem Vorspannkörper (24.2) mechanisch verbunden ist.

5. Piezoelektrischer Drucksensor (1) nach Anspruch 4, **dadurch gekennzeichnet, dass** das sich die Elektrodenanordnung (23) in einem ersten Stützbereich mit dem Ladungsabgriff (23.1) mechanisch abstützt, wobei der Ladungsabgriff (23.1), der erste elektrische Isolationskörper (25), ein Kompensationselement (26) und der Vorspannkörper (24.2) mechanisch miteinander kontaktiert sind; und dass sich die Elektrodenanordnung (23) in einem zweiten Stützbereich mit der Ladungsableitung (23.2) abstützt, wobei die Ladungsableitung (23.2), die elektrische Durchführungsanordnung (27) und der Vorspannkörper (24.2) mechanisch miteinander verbunden sind.

6. Piezoelektrischer Drucksensor (1) nach einem der Ansprüche 4 oder 5, **dadurch gekennzeichnet, dass** die elektrische Durchführungsanordnung (27) ein erstes Adapterelement (27.1), einen zweiten elektrischen Isolationskörper (27.2) und ein zweites Adapterelement (27.3) aufweist; dass die Ladungsableitung (23.2) mit dem zweiten Adapterelementes (27.3) elektrisch und mechanisch verbunden ist; und dass die Ladungsableitung (23.2) und der Vorspannkörper (24.2) durch den zwischen ihnen angeordneten zweiten elektrischen Isolationskörper (27.2) gegeneinander elektrisch isoliert sind.

7. Piezoelektrischer Drucksensor (1) nach einem der Ansprüche 2 oder 3, **dadurch gekennzeichnet, dass** das sich die Elektrodenanordnung (23) in einem ersten Stützbereich mit dem Ladungsabgriff (23.1) mechanisch abstützt, wobei der Ladungsabgriff (23.1), der erste elektrische Isolationskörper (25), ein Kompensationselement (26) und der Vorspannkörper (24.2) mechanisch miteinander verbunden sind.

8. Piezoelektrischer Drucksensor (1) nach Anspruch 7, **dadurch gekennzeichnet, dass** sich die Elektrodenanordnung (23) in einem dritten Stützbereich mit dem Ladungsabgriff (23.1) abstützt, wobei der Ladungsabgriff (23.1), der piezoelektrische Aufnehmer (22), die Vorspannhülse (24.1) und der Vorspannkörper (24.2) mechanisch miteinander verbunden sind.

9. Piezoelektrischer Drucksensor (1) nach Anspruch 8, **dadurch gekennzeichnet, dass** der piezoelektrische Aufnehmer (22) ein piezoelektrisches Element (22.2) und ein zweites Auflageelement (22.3) aufweist; dass das zweite Auflageelement (22.3) auf einer von der Membran (21) abgewandten Seite des piezoelektrisches Elementes (22.2) angeordnet ist; dass das zweite Auflageelement (22.3) zwischen dem piezoelektrischen Element (22.2) und dem Ladungsabgriff (23.1) angeordnet ist; und dass das zweite Auflageelement (22.3) stoffschlüssig mit dem piezoelektrischen Element (22.2) und stoffschlüssig mit dem Ladungsabgriff (23.1) verbunden ist.

10. Piezoelektrischer Drucksensor (1) nach Anspruch 9, **dadurch gekennzeichnet, dass** der piezoelektrische Aufnehmer (22) ein erstes Auflageelement (22.1) aufweist; dass das erste Auflageelement (22.1) auf einer der Membran (21) zugewandten Seite des piezoelektrisches Elementes (22.2) angeordnet ist; und dass das erste Auflageelement (22.1) stoffschlüssig mit dem piezoelektrischen Element (22.2) und stoffschlüssig mit einer Vorspannhülse (24.1) verbunden ist.

11. Piezoelektrischer Drucksensor (1) nach einem der Ansprüche 1 bis 10, **dadurch gekennzeichnet, dass** das elektrische Verbindungselement (43) auf einer äusseren Oberfläche ein erstes Rastierelement (43.00) aufweist, welches in ein zweites Rastierelement (41.20) auf einer inneren Oberfläche eines elektrischen Isolationselementes (41.2) ragt; und dass das erste Rastierelement (43.00) und das zweite Rastierelement (41.20) zueinander passend ausgeführt sind und einen Form- oder Berührschluss mit Spiel bilden.

12. Verfahren zur Herstellung eines piezoelektrischen Drucksensors (1) nach einem der Ansprüche 1 bis 11, **dadurch gekennzeichnet, dass** eine Sensoranordnung (2) als Halbzeug bereitgestellt wird, welche Sensoranordnung (2) eine Membran (21), eine Sensorgehäuseanordnung (20), einen piezoelektrischen Aufnehmer (22) und eine Elektrodenanordnung (23) aufweist, welche Membran (21), welcher piezoelektrische Aufnehmer (22) und welche Elektrodenanordnung (23) in der Sensorgehäuseanordnung (20) angeordnet sind, welche Elektrodenanordnung (23) einen zylinderförmigen Ladungsabgriff (23.1) und eine stabförmige Ladungsableitung (23.2) aufweist, welcher Ladungsabgriff (23.1) und welche Ladungsableitung (23.2) einstückig sind oder stoffschlüssig miteinander verbunden sind; dass eine Sensorkabelanordnung (4) bereitgestellt wird, welche Signalkabelanordnung (4) ein Verbindungselementgehäuse (40), ein Signalkabel (41), einen Stützkörper (42) und ein elektrisches Verbindungselement (43) aufweist; welches Signalkabel (41) einen elektrischen Signalleiter (41.1) aufweist; welches elektrische Verbindungselement (43) im Verbindungselementgehäuse (40) angeordnet ist; welches elektrische Verbindungselement (43) mit dem elektrischen Signalleiter (41.1) elektrisch und mechanisch verbunden ist, und welches elektrische Verbindungselement (43) hohlzylinderförmig ist; dass die Ladungsableitung (23.2) bereichsweise mit dem elektrischen Verbindungselement (43) zusammengeführt wird, derart, dass ein von der Membran (21) abgewandtes Ende der Ladungsableitung (23.2) in das elektrische Verbindungselement (43) hineinragt; und dass ein Stoffschluss zwischen der Ladungsableitung (23.2) und dem elektrischen Verbindungselement (43) hergestellt wird.

13. Verfahren nach Anspruch 12, **dadurch gekennzeichnet dass** eine Signalkabelanordnung (4) mit dem Stützkörper (42) bereitgestellt wird, welcher Stützkörper (42) einen Stützkörperrahmen (42.1) aufweist; dass das elektrische Verbindungselement (43) im Stützkörper (42) angeordnet wird, welches elektrische Verbindungselement (43) durch mindestens ein Fenster im Stützkörperrahmen (42.1) von aussen zugänglich ist; und dass der Stoffschluss durch das Fenster im Stützkörperrahmen (42.1) hergestellt wird.

14. Verfahren nach Anspruch 13, **dadurch gekennzeichnet dass** eine Signalkabelanordnung (4) mit einem Verbindungselementgehäuse (40) bereitgestellt wird, welches Verbindungselementgehäuse (40) über den Stützkörper (42) geschoben wird und der Stützkörperrahmen (42.1) bei aufgeschobenem Verbindungselementgehäuse (40) von aussen zugänglich ist; dass die Sensoranordnung (2) ein Sensorgehäuse (20.1) aufweist, welche Ladungsableitung (23.2) im Sensorgehäuse (20.1) angeordnet ist, welches Verbindungselementgehäuse (40) nach Herstellung des Stoffschlusses gegen das Sensorgehäuse (20) verschoben wird und der Stützkörperrahmen (42.1) bei zurückgeschobenem Verbindungselementgehäuse (40) von aussen nicht mehr zugänglich ist.

## Claims

1. A piezoelectric pressure sensor (1); comprising in a sensor assembly (2), a membrane (21), a sensor housing assembly (20), a piezoelectric sensor (22) and an electrode arrangement (23); wherein said sensor assembly (2) is disposed in a front area of the piezoelectric pressure sensor (1); said membrane (21), wherein said piezoelectric sensor (22) and said electrode arrangement (23) are disposed in the sensor housing assembly (20); wherein said membrane (21) captures a pressure profile; wherein the captured pressure profile generates polarization charges on said piezoelectric sensor (22); wherein said electrode arrangement (23) comprises a cylindrically shaped charge pick-off (23.1) and a rod-shaped charge output (23.2), wherein said charge pick-off (23.1) receives generated polarization charges and said charge output (23.2) transmits received polarization charges as signals; wherein said charge pick-off (23.1) and said charge output (23.2) are formed integrally or are connected to each other by material bonding; said piezoelectric pressure sensor (1) also comprising a signal cable assembly (4), which is disposed in an area of the surroundings of the piezoelectric pressure sensor (1) that is adjacent to its front area; wherein said signal cable assembly (4) comprises a connection element casing (40), a signal cable (41), a supporting body (42) and an electrical connecting element (43); wherein said signal cable (41) comprises a signal conductor (41.1); wherein said electrical connecting element (43) is disposed in the connection element casing (40); and wherein said electrical connecting element (43) is electrically and mechanically connected to the electrical signal conductor (41.1); wherein the electrical connecting element (43) has the form of a hollow cylinder; that a side charge output (23.2) that faces away from the membrane (21) protrudes into the electrical connecting element (43); and that an external surface of the charge output (23.2) is connected in certain areas by material bonding to the electrical connecting element (43) and transmits signals through the electrical connecting element (43) into the signal conductor (41.1).

2. The piezoelectric pressure sensor (1) according to claim 1, **characterized in that** the piezoelectric pressure sensor (1) comprises a pre-stressing body (24.2); that the pre-stressing body (24.2) is arranged on a side of the charge pick-off (23.1) that faces away from the membrane (21); and that the pre-stressing body (24.2) mechanical pre-stresses the piezoelectric sensor (22).

3. The piezoelectric pressure sensor (1) according to claim 2, **characterized in that** the charge pick-off (23.1) and the pre-stressing body (24.2) are electrically insulated against each other by a first electric insulation body (25) arranged between them.

4. The piezoelectric pressure sensor (1) according to any of the claims 2 or 3, **characterized in that** the charge output (23.2) is arranged on the side of the charge pick-off (23.1) that faces away form the membrane (21); that the charge output (23.2) extends centrally through a first electric insulation body (25) and the pre-stressing body (24.2) and is spaced apart from the first electric insulation body (25) and the pre-stressing body (24.2) by a third gap; and that the charge output (23.2) is mechanically supported on an electric feedthrough arrangement (27) on the side of the pre-stressing body (24.2) that faces away from the membrane (21), which electric feedthrough arrangement (27) being mechanically connected to the pre-stressing body (24.2).

5. The piezoelectric pressure sensor (1) according to claim 4, **characterized in that** in a first supporting area the electrode arrangement (23) is mechanically supported via the charge pick-off (23.1), wherein the charge pick-off (23.1), the first electric insulation body (25), a compensation element (26) and the pre-stressing body (24.2) are mechanically contacted to each other; and that in a second supporting area the electrode arrangement (23) is supported via the charge output (23.2) wherein the charge output (23.2), the electric feedthrough arrangement (27) and the pre-stressing body (24.2) are mechanically connected to each other.

6. The piezoelectric pressure sensor (1) according to any of the claims of 4 or 5, **characterized in that** the electric feedthrough arrangement (27) has a first adapter element (27.1), a second electric insulation body (27.2) and a second adapter element (27.3); that the charge output (23.2) is electrically and mechanically connected to the second adapter element (27.3); and that the charge output (23.2) and the pre-stressing body (24.2) are electrically insulated against each other by the second electric insulation body (27.2) arranged between them.

7. The piezoelectric pressure sensor (1) according to any of the claims of 2 or 3, **characterized in that** in a first supporting area the electrode arrangement (23) is mechanically supported via the charge pick-off (23.1), wherein the charge pick-off (23.1), the first electric insulation body (25), a compensation element (26) and the pre-stressing body (24.2) are mechanically connected to each other.

8. The piezoelectric pressure sensor (1) according to claim 7, **characterized in that** in a third supporting area the electrode arrangement (23) is supported via the charge pick-off (23.1), wherein the charge pick-off (23.1), the piezoelectric sensor (22), the pre-stressing sleeve (24.1) and the pre-stressing body (24.2) are mechanically connected to each other.

9. The piezoelectric pressure sensor (1) according to claim 8, **characterized in that** the piezoelectric sensor (22) comprises a piezoelectric element (22.2) and a second support element (22.3); that the second support element (22.3) is arranged on a side of the piezoelectric element (22.2) that faces away from the membrane (21); that the second support element (22.3) is arranged between the piezoelectric element (22.2) and the charge pick-off (23.1); and that the second support element (22.3) is connected to the piezo-electric element (22.2) by material bonding and is connected to the charge pick-off (23.1) by material bonding.

10. The piezoelectric pressure sensor (1) according to claim 9, **characterized in that** the piezoelectric sensor (22) comprises a first support element (22.1); that the first support element (22.1) is arranged on a side of the piezoelectric element (22.2) that faces away from the membrane (21); and that the first support element (22.1) is connected to the piezo-electric element (22.2) by material bonding and is connected to a pre-stressing sleeve (24.1) by material bonding.

11. The piezoelectric pressure sensor (1) according to any of claims 1 to 10, **characterized in that** the electrical connecting element (43) on an outer surface thereof comprises a first locking element (43.00), which protrudes into a second locking element (41.20) on an inner surface of an electric insulation element (41.2); and that the first locking element (43.00) and the second locking element (41.20) are formed matching each other and form a form or contact closure with play.

12. A process for manufacturing a piezoelectric pressure sensor (1) according to any of the claims 1 to 11, **characterized in that** a sensor assembly (2) is provided as a semi-finished product, wherein said sensor assembly (2) comprises a membrane (21), a piezoelectric sensor (22) and an electrode arrangement (23); wherein said membrane (21), said piezoelectric sensor (22) and said electrode arrangement (23) are disposed in the sensor housing assembly (20); wherein said electrode arrangement (23) comprises a cylindrically shaped charge pick-off (23.1) and a rod-shaped charge output (23.2), wherein said charge pick-off (23.1) and said charge output (23.2) are formed integrally or are connected to each other by material bonding; that a sensor cable assembly (4) is provided; wherein said signal cable assembly (4) comprises a connection element casing (40), a signal cable (41), a supporting body (42) and an electrical connecting element (43); wherein said signal cable (41) comprises a signal conductor (41.1); said electrical connecting element (43) being disposed in the connection element casing (40); said electrical connecting element (43) being electrically and mechanically connected to the electrical signal conductor (41.1); and said electrical connecting element (43) having the form of a hollow cylinder; that the charge output (23.2) is connected in certain areas to the electrical connecting element (43), in such a way, that a side charge output (23.2) that faces away from the membrane (21) protrudes into the electrical connecting element (43); and that a material bond is produced between the charge output (23.2) and the electrical connecting element (43).

13. The process according to claim 12, **characterized in that** a signal cable assembly (4) is provided with a supporting body (42), said supporting body (42) comprising a supporting body frame (42.1); that the electrical connecting element (43) is arranged in the supporting body (42), said electrical connecting element (43) is accessible from the outside through at least one window in the supporting body frame (42.1); and that the material bonding is produced through the window in the supporting body frame (42.1).

14. The process according to claim 13, **characterized in that** a signal cable assembly (4) with a connection element casing (40) is provided, said connection element casing (40) is pushed over the supporting body (42) and the supporting body frame (42.1) is accessible from the outside with the connection element housing (40) in place; that the sensor assembly (2) comprises a sensor housing (20), said charge output (23.2) is arranged in the sensor housing (20), said (40) is displaced with respect to the sensor housing (20) after the material bond has been made, and said supporting body frame (42.1) being no longer accessible from the outside after displacement of said connection element casing (40).

## Revendications

1. Capteur de pression piézoélectrique (1) comprenant, dans un agencement de capteur (2), une membrane (21), un agencement de boîtier de capteur (20), un capteur piézoélectrique (22) et un agencement d'électrodes (23), ledit agencement de capteur (2) étant disposé dans une zone avant du capteur de pression piézoélectrique (1); ladite membrane (21), ledit capteur piézoélectrique (22) et ledit agencement d'électrodes (23) étant disposés dans l'agencement de boîtier de capteur (20); dans lequel ladite membrane (21) capte un profil de pression; ledit profil de pression capté génère des charges de polarisation sur ledit capteur piézoélectrique (22); ledit agencement d'électrodes (23) comprend un récepteur des charges (23.1) en forme de cylindre et un dispositif de transmission des charges (23.2) en forme de barreau, ledit récepteur des charges (23.1) recevant les charges de polarisation générées et ledit dispositif de transmission des charges (23.2) transmettant les charges de polarisation reçues en tant que signaux; ledit récepteur des charges (23.1) et ledit dispositif de transmission des charges (23.2) étant formés en une seule pièce ou reliés entre eux par liaison de matière; ledit capteur de pression (1) comprenant en outre un ensemble de câble de signal (4) agencé dans une zone d'un environnement jouxtant ladite zone avant du capteur de pression piézoélectrique (1); ledit ensemble de câble de signal (4) comprenant un boîtier d'élément de connexion (40), un câble de signal (41), un corps d'appui (42) et un élément de connexion électrique (43); ledit câble de signal (41) comprenant un conducteur de signaux électriques (41.1); ledit élément de connexion électrique (43) étant agencé dans le boîtier d'élément de connexion (40) et ledit élément de connexion électrique (43) étant en connexion électrique et mécanique avec le conducteur de signaux électriques (41.1); dans lequel l'élément de connexion électrique (43) est en forme de cylindre creux; en ce qu'une extrémité du dispositif de transmission des charges (23.2) éloignée de la membrane (21) s'étend dans l'élément de connexion électrique (43) et en ce qu'une surface extérieure du dispositif de transmission des charges (23.2) est connectée par liaison de matière dans certaines zones à une surface intérieure de l'élément de connexion électrique (43) et transmet, via l'élément de connexion électrique (43), des signaux dans le conducteur de signaux électriques (41.1).

2. Capteur de pression piézoélectrique (1) selon la revendication 1, **caractérisé en ce que** le capteur de pression piézoélectrique (1) comprend un corps de précontrainte (24.2), **en ce que** ledit corps de précontrainte (24.2) est disposé sur un côté éloigné de la membrane (21) du récepteur des charges (23.1) et **en ce que** le corps de précontrainte (24.2) précontraint mécaniquement ledit capteur piézoélectrique (22).

3. Capteur de pression piézoélectrique (1) selon la revendication 2, **caractérisé en ce que** le récepteur des charges (23.1) et le corps de précontrainte (24.2) sont électriquement isolés l'un de l'autre par un premier corps d'isolation électrique (25) agencé entre eux.

4. Capteur de pression piézoélectrique (1) selon l'une quelconque des revendications 2 ou 3, **caractérisé en ce que** le dispositif de transmission des charges (23.2) est disposé sur le côté éloigné de la membrane (21) du récepteur des charges (23.1), **en ce que** le dispositif de transmission de charge (23.2) s'étend de manière centrale à travers un premier corps d'isolation électrique (25) et le corps de précontrainte (24.2) et est espacé du premier corps d'isolation électrique (25) et du corps de précontrainte (24.2) par une troisième fente; et **en ce que** sur le côté éloigné de la membrane (21) du corps de précontrainte (24.2) le dispositif de transmission de charge (23.2) s'appuie mécaniquement sur un agencement de traversée électrique (27), lequel agencement de traversée électrique (27) étant relié mécaniquement au corps de précontrainte (24.2).

5. Capteur de pression piézoélectrique (1) selon la revendication 4, **caractérisé en ce que** dans une première zone d'appui, l'agencement d'électrodes (23) s'appuie mécaniquement avec le récepteur de charge (23.1), dans lequel le récepteur de charge (23.1), le premier corps d'isolation électrique (25), un élément de compensation (26) et le corps de précontrainte (24. 2) sont en contact mécanique les un avec les autres; et **en ce que** dans une deuxième zone d'appui, l'agencement d'électrodes (23) s'appuie avec le dispositif de transmission de charge (23.2), dans lequel le dispositif de transmission de charge (23.2), l'agencement de traversée électrique (27) et le corps de précontrainte (24.2) sont reliés mécaniquement les uns aux autres.

6. Capteur de pression piézoélectrique (1) selon l'une quelconque des revendications 4 ou 5, **caractérisé en ce que** l'agencement de traversée électrique (27) comporte un premier élément adaptateur (27.1), un deuxième corps d'isolation électrique (27.2) et un deuxième élément adaptateur (27.3), **en ce que** le dispositif de transmission de charge (23.2) est relié au deuxième élément adaptateur (27.3) de manière électrique et mécanique; et **en ce que** le dispositif de transmission de charge (23.2) et le corps de précontrainte (24.2) sont isolés électriquement l'un de l'autre par le deuxième corps d'isolation électrique (27.2) disposé entre eux.

7. Capteur de pression piézoélectrique (1) selon l'une quelconque des revendications 2 ou 3, **caractérisé en ce que** dans une première zone d'appui, l'agencement d'électrodes (23) s'appuie mécaniquement avec le récepteur de charge (23.1), dans lequel le récepteur de charge (23.1), le premier corps d'isolation électrique (25), un élément de compensation (26) et le corps de précontrainte (24.2) étant reliés mécaniquement les uns aux autres.

8. Capteur de pression piézoélectrique (1) selon la revendication 7, **caractérisé en ce que** dans une troisième zone d'appui, l'agencement d'électrodes (23) s'appuie avec le récepteur de charge (23.1), dans lequel le récepteur de charge (23.1), le capteur piézoélectrique (22), la douille de précontrainte (24.1) et le corps de précontrainte (24.2) étant reliés mécaniquement les uns aux autres.

9. Capteur de pression piézoélectrique (1) selon la revendication 8, **caractérisé en ce que** le capteur piézoélectrique (22) comprend un élément piézoélectrique (22.2) et un deuxième élément d'appui (22.3), **en ce que** le deuxième élément d'appui (22.3) est disposé sur un côté éloigné de la membrane (21) de l'élément piézoélectrique (22.2), **en ce que** le deuxième élément d'appui (22.3) est agencé entre l'élément piézoélectrique (22.2) et le récepteur des charges (23.1) et **en ce que** le deuxième élément d'appui (22.3) est relié à l'élément piézoélectrique (22.2) par une liaison de matière et relié au récepteur de charge (23.1) par une liaison de matière.

10. Capteur de pression piézoélectrique (1) selon la revendication 9, **caractérisé en ce que** le capteur piézoélectrique (22) comprend un premier élément d'appui (22.1), **en ce que** ledit premier élément d'appui (22.1) est agencé sur un côté de l'élément piézoélectrique (22.2) faisant face à la membrane (21); et **en ce que** le premier élément d'appui (22.1) est relié à l'élément piézoélectrique (22.2) par liaison de matière et relié à une douille de précontrainte (24.1) par liaison de matière.

11. Capteur de pression piézoélectrique (1) selon l'une quelconque des revendications 1 à 10, **caractérisé en ce que** l'élément de connexion électrique (43) comprend sur une surface extérieure de celui-ci un premier élément de verrouillage (43.00) qui s'étend dans un deuxième élément de verrouillage (41.20) situé sur une surface intérieure d'un élément d'isolation électrique (41.2) et **en ce que** le premier élément de verrouillage (43.00) et le deuxième élément de verrouillage (41.20) sont formés de manière complémentaire l'un à l'autre et forment entre eux une fermeture de forme ou de contact avec du jeu.

12. Procédé de fabrication d'un capteur de pression piézoélectrique (1) selon l'une quelconque des revendications 1 à 11, **caractérisé en ce qu'**un agencement de capteur (2) est fourni en forme d'un produit semi-fini, ledit agencement de capteur (2) comprenant une membrane (21), un agencement de boîtier de capteur (20), un capteur piézoélectrique (22) et un agencement d'électrodes (23), dans lequel ladite membrane (21), ledit capteur piézoélectrique (22) et ledit agencement d'électrodes (23) sont disposés dans l'agencement de boîtier de capteur (20); ledit agencement d'électrodes (23) comprenant un récepteur des charges (23.1) en forme de cylindre et un dispositif de transmission des charges (23.2) en forme de barreau, ledit récepteur des charges (23.1) et ledit dispositif de transmission des charges (23.2) étant formés en une seule pièce ou reliés entre eux par liaison de matière; **en ce qu'**un ensemble de câble de signal (4) est prévu comprenant un boîtier d'élément de connexion (40), un câble de signal (41), un corps d'appui (42) et un élément de connexion électrique (43); ledit câble de signal (41) comprenant un conducteur de signaux électriques (41.1); ledit élément de connexion électrique (43) étant agencé dans le boîtier d'élément de connexion (40); ledit élément de connexion électrique (43) étant en connexion électrique et mécanique avec le conducteur de signaux électriques (41.1) et l'élément de connexion électrique (43) étant en forme de cylindre creux; **en ce que** le dispositif de transmission des charges (23.2) est guidé conjointement avec l'élément de connexion électrique (43) dans certaines zones de manière qu'une extrémité éloignée de la membrane (21) du dispositif de transmission des charges (23.2) s'étend dans l'élément de connexion électrique (43); et **en ce qu'**une liaison de matière est formée entre le dispositif de transmission des charges (23.2) et l'élément de connexion électrique (43).

13. Procédé selon la revendication 12, **caractérisé en ce qu**'un ensemble de câble de signal (4) avec le corps d'appui (42) est fourni, ledit corps d'appui (42) comprenant un cadre de corps de support (42.1), en ce que l'élément de connexion électrique (43) est agencé dans le corps d'appui (42), ledit élément de connexion électrique (43) étant accessible de l'extérieur à travers au moins une fenêtre dans le cadre du corps de support (42.1) et en ce que ladite liaison de matière est formé à travers la fenêtre dans le cadre du corps de support (42.1).

14. Procédé selon la revendication 13, **caractérisé en ce qu'**un ensemble de câble de signal (4) avec un boîtier d'élément de connexion (40) est fourni, ledit boîtier d'élément de connexion (40) est coulissé sur le corps d'appui (42) et, avec le boîtier d'élément de connexion (40) coulissé en place, le cadre du corps de support (42.1) est accessible de l'extérieur, **en ce que** l'agencement de capteur (2) comprend un boîtier de capteur (20), dans ledit boîtier du capteur (20) étant agencé ledit dispositif de transmission de charge (23.2), dans lequel, après la réalisation de la liaison de matière, ledit boîtier d'élément de connexion (40) étant déplacé par rapport au boîtier du capteur (20) et ,après le déplacement dudit boîtier de l'élément de connexion (40), ledit cadre du corps de support (42.1) n'étant plus accessible de l'extérieur.
